(19) Europäisches Patentamt
European Patent Office
Office européen des brevets

(11) **EP 4 063 901 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **21164901.7**

(22) Anmeldetag: **25.03.2021**

(51) Internationale Patentklassifikation (IPC):
**G01S 7/481** (2006.01)   **G01S 17/89** (2020.01)

(52) Gemeinsame Patentklassifikation (CPC):
**G01S 7/4817; G01S 17/89**

(54) **VORRICHTUNG ZUR VERMESSUNG EINER UMGEBUNG**

DEVICE FOR MEASURING AN ENVIRONMENT

DISPOSITIF DE MESURE D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.09.2022 Patentblatt 2022/39**

(73) Patentinhaber: **RIEGL Laser Measurement Systems GmbH**
**3580 Horn (AT)**

(72) Erfinder: **RIEGER, Peter**
**3824 Grossau (AT)**

(74) Vertreter: **Weiser Voith Gugler Patentanwälte Partnerschaft Kopfgasse 7 1130 Wien (AT)**

(56) Entgegenhaltungen:
**DE-A1- 102004 050 682     US-A1- 2019 107 623**

# EP 4 063 901 B1

**Beschreibung**

Die vorliegende Erfindung betrifft eine Vorrichtung zur Vermessung einer dazu relativbewegten Umgebung durch Laufzeitmessung von an der Umgebung reflektierten Laserimpulsen in einem Koordinatensystem, umfassend eine erste Scaneinheit zum Aussenden eines ersten Impulszuges von Laserimpulsen mittels eines ersten Lasersenders in einer ersten Senderichtung auf eine erste Ablenkeinrichtung über aufeinanderfolgende Ablenkperioden mit einer Impulswiederholrate, wobei die jeweils in eine Ablenkperiode fallenden Laserimpulse in um eine erste Scanachse aufgefächerte erste Scanrichtungen ausgesandt werden und so pro Ablenkperiode jeweils einen ersten Scanfächer bilden, den sie mit einem vorgebbaren Winkelgeschwindigkeitsprofil abschreiten, und zum Empfangen der zugehörigen, von ersten Abtastpunkten der Umgebung reflektierten Laserimpulse.

Vorrichtungen dieser Art sind z.B. in der EP 3 182 159 B1 beschrieben und werden beispielsweise von einem Flugzeug oder Schiff mitgeführt, um Umgebungen wie den Erdboden oder Meeresgrund topographisch zu vermessen. Es ist auch möglich, eine solche Vorrichtung auf einem Landfahrzeug zu montieren, um z.B. Hausfassaden, Straßenschluchten oder Tunnel im Vorbeifahren zu vermessen. Die Vorrichtung kann auch stationär aufgestellt werden, beispielsweise in einem Tag- oder Untertagbergwerk, um dessen Abbau zu vermessen, über einem Förderband, um darauf bewegte Objekte zu vermessen, usw.

Von der Scaneinheit werden dabei Laserimpulse unter verschiedensten Scanrichtungen auf viele Zielpunkte ("Abtastpunkte") in der Umgebung ausgesandt, und aus Laufzeitmessungen der Zielreflexionen werden die Zielentfernungen und daraus - in Kenntnis der Lage der Scaneinheit und der jeweiligen Scanrichtung - ein Punktemodell ("3D-Punktwolke") der Umgebung erstellt. Bei mobilen, fahrzeuggestützten Vorrichtungen wird dabei der von den Scanrichtungen der Laserimpulse einer Ablenkperiode aufgespannte Scanfächer durch die Fortbewegung des Fahrzeugs über die Umgebung geführt. Bei stationären Vorrichtungen wird der Scanfächer z.B. mittels einer Drehung der Scaneinheit rundum geschwenkt, um die Umgebung abzutasten. Ebenso kann die zu vermessende Umgebung gegenüber dem Scanfächer relativbewegt werden, z.B. zur Vermessung von Gegenständen auf Förderbändern.

Dabei ist eine möglichst rasche und örtlich hoch auflösende Erstellung der 3D-Punktwolke wünschenswert. Der Auflösung der Punktwolke sind jedoch Grenzen gesetzt. So kann z.B. die Impulswiederholrate, welche die Anzahl der Abtastpunkte und damit die Auflösung der 3D-Punktwolke wesentlich beeinflusst, nicht beliebig erhöht werden: Bei hoher Impulswiederholrate oder größerer Zielentfernung wird beispielsweise schon der nächste Laserimpuls ausgesandt, noch bevor der reflektierte erste Sendeimpuls empfangen wird, sodass die eintreffenden Empfangsimpulse nicht mehr eindeutig ihrem jeweiligen Sendeimpuls zugeordnet werden können. Dies ist als "multiple time around"-(MTA-) -Problem bekannt. Die maximale Größe $d_{max}$ eines eindeutig vermessbaren Entfernungsbereiches, einer sog. MTA-Zone, ergibt sich dabei aus der Impulswiederholrate (pulse repetition rate) PRR und der Lichtgeschwindigkeit c zu $d_{max} = c/(2 \cdot PRR)$.

Zusätzlich treten an den Rändern jeder MTA-Zone konstruktionsbedingt sogenannte "blind ranges" auf, weil die Empfangselektronik durch Nahreflexionen eines ausgesandten Laserimpulses an z.B. Gehäuse- oder Montageteilen der Vorrichtung gesättigt bzw. überlastet und damit "blind" für den Empfang eines reflektierten Laserimpulses ist. Möglichst große MTA-Zonen sind daher erstrebenswert, um die Anzahl der "blind ranges" über den gesamten zu vermessenden Entfernungsbereich zu minimieren. Dies begrenzt aber wiederum die Impulswiederholrate und folglich die Anzahl von Abtastpunkten und damit Auflösung der 3D-Punktwolke.

Eine bloße Erhöhung der Abtastpunkte in der 3D-Punktwolke, wie in der DE 10 2004 050 682 A1 durch Verwenden mehrerer Scaneinheiten erreicht, erhöht aber noch nicht notwendigerweise auch deren Ortsauflösung. So könnten z.B. manche Zielpunkte mehrfach abgetastet werden, d.h. sich lokale Cluster von Abtastpunkten bilden, und andere Bereiche der Umgebung zu wenig Abtastpunkte enthalten, sodass die gewünschte Auflösung der 3D-Punktwolke nicht über die gesamte Umgebung vorliegt. Eine möglichst gleichmäßige Verteilung der Abtastpunkte über die Umgebung ist daher wesentlich, um eine hochwertige 3D-Punktwolke zu erzielen.

Die Erfindung setzt sich zum Ziel, eine Vorrichtung zum Laserscannen zu schaffen, welche eine besonders rasche und aussagekräftige Erstellung einer 3D-Punktwolke der Umgebung ermöglicht.

Dieses Ziel wird mit einer Vorrichtung der einleitend genannten Art erreicht, umfassend zumindest eine weitere Scaneinheit zum Aussenden eines weiteren Impulszuges von Laserimpulsen mittels eines weiteren Lasersenders in einer weiteren Senderichtung auf eine weitere Ablenkeinrichtung über aufeinanderfolgende Ablenkperioden mit derselben Impulswiederholrate, wobei die jeweils in eine Ablenkperiode fallenden Laserimpulse in um eine weitere Scanachse aufgefächerte weitere Scanrichtungen ausgesandt werden und so pro Ablenkperiode jeweils einen weiteren Scanfächer bilden, den sie mit demselben vorgebbaren Winkelgeschwindigkeitsprofil abschreiten, und zum Empfangen der zugehörigen, von weiteren Abtastpunkten der Umgebung reflektierten Laserimpulse, wobei sich alle Scanfächer in Richtung einer der Scanachsen gesehen im Wesentlichen überlappen, und eine an die zumindest eine weitere Scaneinheit angeschlossene Steuereinrichtung, welche dazu ausgebildet ist, die Scanfächer jeder weiteren Scaneinheit gegenüber den Scanfächern einer in einer vorgegebenen Reihung der Scaneinheiten jeweils benachbarten Scaneinheit um einen von der Impulswiederholrate und dem Winkelgeschwindigkeitsprofil abhängigen Schwenkwinkel so zu verschwenken, dass die weiteren Abtastpunkte nicht mit den ersten Abtastpunkten zusammenfallen.

Die Laserscanvorrichtung der Erfindung kann durch ihre Vielzahl an Scaneinheiten gleichzeitig zwei oder mehr Scanfächer aussenden, wodurch in derselben Zeit zumindest doppelt so viele Abtastpunkte der Umgebung für die Punktwolke erstellt werden können. Werden die Vorrichtung und die Umgebung zusätzlich in der Scanachsenrichtung eines Scanfächers relativ zueinander bewegt, kann im Überlappungsbereich der Scanfächer ein von einem in Scanachsenrichtung gesehen vorderen Scanfächer bereits gescannter Bereich der Umgebung von einem in dieser Scanachsenrichtung gesehen hinteren Scanfächer erneut gescannt werden. Dabei verhindert das erfindungsgemäße Verschwenken der Scanfächer, dass die Laserimpulse des hinteren Scanfächers die vom vorderen Scanfächer bereits gescannten Abtastpunkte des Bereichs unter Umständen erneut treffen, d.h. die Abtastpunkte der vorderen und hinteren Scanfächer zusammenfallen. Dies garantiert, dass die Umgebung tatsächlich mit einer höheren Auflösung vermessen wird.

Impulswiederholrate und Winkelgeschwindigkeit können für eine spezifische Vermessungsaufgabe fix vorgegeben sein oder sich während der Vermessung ändern. Dabei ermöglicht die erfindungsgemäße Abhängigkeit des Schwenkwinkels von der Impulswiederholrate und dem Winkelgeschwindigkeitsprofil der Steuereinrichtung einen automatisch daran angepassten Betrieb. Die Steuereinrichtung kann diese Werte z.B. selbst messen oder von einer Messeinheit oder einem Stellwertgeber empfangen, mit dem der Messtechniker diese Werte im Betrieb einstellt.

Nicht zuletzt empfängt jede Scaneinheit nur die in der jeweiligen Scanrichtung ihres eigenen Scanfächers von der Umgebung reflektierten Laserimpulse, wodurch die von unterschiedlichen Scaneinheiten ausgesandten Laserimpulse empfängerseitig geometrisch getrennt sind. Dies erlaubt es, die Anzahl an verarbeiteten Laserimpulsen pro Zeit entsprechend der Anzahl an Scaneinheiten zu vervielfachen, ohne dabei die MTA-Zonen zu verkleinern.

Im Ergebnis erzielt die Vorrichtung der Erfindung eine besonders rasche, hochwertige und aussagekräftige Vermessung der Umgebung.

Wie bereits kurz erörtert besteht eine bevorzugte Anwendungsform der Vorrichtung der Erfindung darin, dass sie auf einem Fahrzeug, das für eine Hauptbewegungsrichtung ausgebildet ist, bevorzugt auf einem Luftfahrzeug, mit ihren Scanachsen jeweils nicht-normal zur Hauptbewegungsrichtung montiert ist. Dadurch ist sichergestellt, dass die Hauptbewegungsrichtung eine Komponente in Richtung der Scanachse, in welcher gesehen die Scanfächer einander überlappen, aufweist. Dadurch kann ein in dieser Richtung gesehen hinterer Scanfächer einen bereits von einem in dieser Richtung gesehen vorderen Scanfächer gescannten Umgebungsbereich erneut scannen, um darin die Dichte der Abtastpunkte in der 3D-Punktwolke zu erhöhen.

In einer bevorzugten Ausführungsform ist die Steuereinrichtung dazu ausgebildet, das Winkelgeschwindigkeitsprofil abhängig von zumindest einem vergangenen Entfernungsmesswert der Umgebung vorzugeben. Dies erlaubt einerseits die Abstände zwischen den Abtastpunkten innerhalb eines Scanfächers und andererseits die Abstände zwischen zwei aufeinanderfolgenden Scanfächern einer Scaneinheit zu vergleichmäßigen. Beispielsweise könnte die Vorrichtung auf einem Flugzeug montiert sein und die Steuereinrichtung das Winkelgeschwindigkeitsprofil flughöhenabhängig so vorgeben, dass eine größere Flughöhe mit höheren und eine kleinere Flughöhe mit niedrigeren Winkelgeschwindigkeiten einhergeht, um bei konstanter Impulswiederholrate über die ganze zu vermessende Umgebung möglichst dieselben Abtastpunktabstände innerhalb der Scanfächer und dieselben Scanfächerabstände zu erreichen.

Grundsätzlich können die Scanfächer unterschiedlicher Scaneinheiten zueinander in beliebiger Lage angeordnet sein, sofern sie in Richtung einer der Scanachsen gesehen überlappen. In einer vorteilhaften Ausführungsform fallen jedoch alle Scanachsen zusammen. Dadurch sind die Scanfächer parallel und gehen von einer einzigen Scanachse aus. Der auf die Scanfächer einer Scaneinheit angewandte Schwenkwinkel ist dadurch nicht mehr von einem allfälligen Neigungswinkel zwischen den unterschiedlichen Scanachsen abhängig.

Zusammenfallende Scanachsen erlauben vor allem auch eine von der Entfernung der Umgebung unabhängige Bestimmung des Schwenkwinkels. Dadurch kann der zur Vergleichmäßigung der Abtastpunkte erforderliche Schwenkwinkel besonders einfach bestimmt und für unterschiedliche Umgebungs-Topographien verwendet werden. Überdies ermöglicht die Verwendung einer gemeinsamen Scanachse eine Maximierung des Überlappungsbereichs der Scanfächer und damit der Breite des Scanstreifens, in dem die Umgebung in der verbesserten Auflösung gescannt werden kann.

Bei zusammenfallenden Scanachsen ist es besonders vorteilhaft, wenn die Steuereinrichtung ferner dazu ausgebildet ist, die Scanfächer jeder weiteren Scaneinheit gegenüber den Scanfächern einer in einer vorgegebenen Reihung der Scaneinheiten jeweils benachbarten Scaneinheit so zu verschwenken, dass die Scanrichtungen der Scanfächer, wenn diese im Wesentlichen dieselbe Ebene im Koordinatensystem einnehmen, um die Scanachsen in regelmäßigen Winkelabständen angeordnet sind. Die Scanfächer können dieselbe Ebene im Koordinatensystem auf zwei Arten einnehmen: Erstens, wenn die Vorrichtung gegenüber der Umgebung bewegt wird und eine in Bewegungsrichtung gesehen hintere Scaneinheit ihren Scanfächer in jene Ebene aussendet, in die eine in Bewegungsrichtung vordere Scaneinheit bereits einen Scanfächer aussandte, sodass diese zeitlich versetzt ausgesandten Scanfächer dieselbe Ebene einnehmen. Dies gilt, wenn die Umgebung gegenüber der Vorrichtung bewegt wird, vice versa. Zweitens, wenn unterschiedliche Scaneinheiten ihre Scanfächer zur selben Zeit in derselben Ebene aussenden, sodass diese permanent dieselbe Ebene einnehmen. Durch die regelmäßige Anordnung der Scanrichtungen im Winkelbereich kann ein allfälliges Zusammenfallen der Abtastpunkte unterschiedlicher Scanfächer in der Umgebung unabhängig von deren Entfernung verhindert und dadurch die Auflösung der 3D-Punktwolke unabhängig von der Topographie stets erhöht werden.

Insbesondere ist es dazu günstig, wenn der Schwenkwinkel zwischen den Scanfächern je zweier in der Reihung einander benachbarter Scaneinheiten, wenn die Scanfächer im Wesentlichen dieselbe Ebene im Koordinatensystem einnehmen, vermehrt um die Winkeldifferenz zwischen den in diesen zwei Scanfächern jeweils erstabgeschrittenen Scanrichtungen, dem Winkel zwischen zwei in einem Scanfächer aufeinanderfolgend abgeschrittenen Scanrichtungen, dividiert durch die Anzahl aller Scaneinheiten, entspricht, optional vermehrt um ein Vielfaches dieses Winkels.

Die Erfindung stellt zwei - optional auch miteinander kombinierbare - Ausführungsformen einer Scanfächer-Verschwenkung durch die Steuereinrichtung bereit. In einer ersten Ausführungsform wird diese Verschwenkung auf elektronischem Wege erreicht, indem die Steuereinrichtung dazu ausgebildet ist, die Scanfächer der genannten zumindest einen weiteren Scaneinheit durch Steuern eines zeitlichen Versatzes beim Aussenden ihres Impulszuges von Laserimpulsen zu verschwenken. Dabei werden die Ansteuerpulse der Laserquellen der Scaneinheiten, z.B. durch Verzögerungsglieder, phasenversetzt, was ein besonders schnelles und präzises Verschwenken ihrer Scanfächer ermöglicht. Außerdem kann die Ansteuerungssoft- oder -hardware kostengünstig reproduziert und so die industrielle Herstellung der Vorrichtung erleichtert werden.

In einer zweiten Ausführungsform wird die Verschwenkung auf optischem Wege erreicht, indem die Steuereinrichtung dazu ausgebildet ist, die Scanfächer der genannten zumindest einen weiteren Scaneinheit durch Steuern optischer Elemente im Strahlengang ihrer Laserimpulse zu verschwenken. Das Verwenden gesteuerter optischer Elemente, z.B. elektrooptischer Elemente, schwenk- oder drehbarer Spiegel, Prismen usw., im Strahlengang erlaubt es, die Scanfächer ohne Beschneidung des Fächerwinkels zu verschwenken.

Die Scaneinheiten der Vorrichtung können z.B. mit Schwingspiegel-, Drehspiegel-, Palmerscannern od.dgl. aufgebaut sein. In einem besonders bevorzugten Vorrichtungsaufbau umfasst die Ablenkeinrichtung jeder Scaneinheit ein um seine Prismenachse drehbares Spiegelprisma, dessen Mantelseiten jeweils eine Spiegelfläche bilden und dessen Prismenachse die Scanachse ist. Mit einem solchen rotierenden Spiegelprisma kann ein konstantes Winkelgeschwindigkeitsprofil beim Abschreiten des Scanfächers und anschließendes Rückspringen an den Anfang des Scanfächers in der nächsten Ablenkperiode erreicht werden, d.h. ein zeilenweises Abtasten der Umgebung mit hoher Geschwindigkeit.

Wenn dabei die Ablenkeinrichtungen aller Scaneinheiten bevorzugt durch ein und dieselbe Ablenkeinrichtung gebildet sind, ergibt sich ein besonders kompakter Aufbau der Scaneinheiten, und gesonderte Antriebe für jedes Spiegelprisma können entfallen. Zusätzlich können so die Scanrichtungen unterschiedlicher Scanfächer durch Referenzierung auf das eine gemeinsame Spiegelprisma besonders einfach aufeinander abgestimmt werden. Außerdem führt ein einziges Spiegelprisma konstruktionsbedingt zum selben Winkelgeschwindigkeitsprofil für die Scanfächer aller Scaneinheiten, so dass diese nicht gesondert synchronisiert werden müssen.

In dem bevorzugten Vorrichtungsaufbau der Erfindung können die Scanrichtungen unterschiedlicher Scanfächer im Winkelbereich insbesondere dadurch regelmäßig angeordnet werden, dass der Schwenkwinkel zwischen den Scanfächern je zweier in der Reihung einander benachbarter Scaneinheiten gewählt wird als

$$\lambda_{k,k-1} = \frac{\omega}{K \cdot PRR} + i \cdot \frac{\omega}{PRR} - \left(2 \cdot (\vartheta_k - \vartheta_{k-1}) + \left[\omega \cdot \frac{D_{k,k-1}}{v} \bmod \frac{360° \cdot 2}{J}\right]\right) \bmod \frac{\omega}{PRR} \qquad (1)$$

mit

| | |
|---|---|
| K | Anzahl der Scanfächer, |
| $\lambda_{k,k-1}$ | Schwenkwinkel des k-ten Scanfächers gegenüber dem (k-1)-ten Scanfächer, |
| $\omega$ | durchschnittliche Winkelgeschwindigkeit des Winkelgeschwindigkeitsprofils, |
| PRR | Impulswiederholrate, |
| i | eine ganze Zahl, |
| $\vartheta_k$ | Senderichtung des k-ten Lasersenders, |
| $D_{k,k-1}$ | Distanz zwischen dem k-ten und (k-1)-ten Scanfächer entlang der Prismenachse, |
| v | Relativgeschwindigkeit zwischen Vorrichtung und Umgebung, |
| J | Anzahl der Spiegelflächen und |
| mod | Modulo-Operator. |

In dem genannten bevorzugten Vorrichtungsaufbau der Erfindung können insbesondere drei vorteilhafte - optional auch miteinander kombinierbare - Varianten für das Verschwenken der Scanfächer mittels optischer Elemente vorgesehen werden.

In einer ersten Variante weist der Lasersender einen im Strahlengang der Laserimpulse liegenden verstellbaren Umlenkspiegel auf und die Steuereinrichtung ist dazu ausgebildet, die Scanfächer der genannten zumindest einen weiteren Scaneinheit durch Verstellen des Umlenkspiegels zu verschwenken. Der Umlenkspiegel definiert durch seine Lage die jeweilige Senderichtung und kann z.B. von einem mit der Steuereinrichtung verbundenen Aktuator verstellt werden. Ein leichter Umlenkspiegel kann aufgrund seiner geringen Massenträgheit besonders schnell verstellt werden, sodass eine z.B. aufgrund einer Änderung des Winkelgeschwindigkeitsprofils notwendige Verschwenkung schnell ausgeführt werden kann. Außerdem kann ein Umlenkspiegel über einen großen Winkelbereich verstellt werden und damit auch große Änderungen der Senderichtung und des Schwenkwinkels erwirken.

In einer zweiten Variante ist der Lasersender gegenüber der Ablenkeinrichtung verstellbar gelagert und die Steuereinrichtung dazu ausgebildet, die Scanfächer der genannten zumindest einen weiteren Scaneinheit durch Steuern der Lage des zugehörigen Lasersenders zu verschwenken. In dieser Variante werden die Lasersender von mit der Steuereinrichtung verbundenen Aktuatoren verstellt, z.B. verschwenkt oder verschoben, sodass auch ohne Umlenkspiegel große Schwenkwinkel erzielt werden können.

In der ersten und der zweiten Variante könnte zum Empfangen der Laserimpulse verschwenkter Scanfächer die Empfangsapertur des Laserempfängers jeder weiteren Scaneinheit so vergrößert werden, dass die reflektierten Laserimpulse auch des verschwenkten zugehörigen Scanfächers noch innerhalb dieser Empfangsapertur liegen. Alternativ dazu können die Laserempfänger der weiteren Scaneinheiten ihre Empfangsapertur beibehalten, wenn die Blickrichtung der Laserempfänger gleichsam mit dem zugehörigen Scanfächer mitverschwenkt wird, z.B. indem die Steuereinrichtung verstellbare optische Elemente im Strahlengang der reflektierten Laserimpulse oder die Lage der Laserempfänger selbst steuert.

In einer dritten Variante ist die Steuereinrichtung dazu ausgebildet, die Scanfächer der genannten zumindest einen weiteren Scaneinheit durch Steuern der Phasenlage der Drehbewegung des Spiegelprismas zu verschwenken. Dadurch können die ohnehin vorhandenen Spiegelprismen - z.B. durch entsprechendes Ansteuern ihrer Drehachsen-Antriebe - gleich zur Scanfächer-Verschwenkung mitverwendet werden, wodurch zusätzliche optische Elemente entfallen.

In einer weiteren bevorzugten Ausführungsform der Erfindung gehen alle Scanfächer vom selben Punkt aus, wodurch eine Beabstandung der Scanfächer-Scheitelpunkte bei der Verschwenkung der Scanfächer nicht berücksichtigt werden muss. Zusätzlich erlaubt dies eine besonders kompakte Bauweise, weil ein Spiegelprisma geringer Länge zum Aussenden verwendet werden kann.

Insbesondere kann bei zusammenfallenden Scanachsen die regelmäßige Anordnung der Scanrichtungen aller Scanfächer, wenn sie im Wesentlichen dieselbe Ebene im Koordinatensystem einnehmen, dadurch bewerkstelligt werden, dass der Schwenkwinkel zwischen den Scanfächern je zweier in der Reihung einander benachbarten Scaneinheiten gewählt wird als

$$\lambda_{k,k-1} = \frac{\omega}{K \cdot PRR} + i \cdot \frac{\omega}{PRR} - \left[ (R_{k,1,p} - R_{k-1,1,p}) \bmod \frac{\omega}{PRR} \right] \qquad (2)$$

mit

| | |
|---|---|
| K | Anzahl der Scanfächer, |
| $\lambda_{k,k-1}$ | Schwenkwinkel des k-ten Scanfächers gegenüber dem (k-1)-ten Scanfächer (k = 1 ... K), |
| $\omega$ | durchschnittliche Winkelgeschwindigkeit des Winkel- geschwindigkeitsprofils, |
| PRR | Impulswiederholrate, |
| i | eine ganze Zahl, |
| $R_{k,1,p}$ | erstabgeschrittene Scanrichtung der k-ten Scaneinheit in einer Referenz-Ablenkperiode, |
| $R_{k-1,1,p'}$ | erstabgeschrittene Scanrichtung der (k-1)-ten Scaneinheit in jener Ablenkperiode, in welcher ihr Scanfächer im Wesentlichen dieselbe Ebene im Koordinatensystem einnimmt wie der Scanfächer der k-ten Scaneinheit in der Referenz-Ablenkperiode, und |
| mod | Modulo-Operator. |

Wie aus Gleichung (2) ersichtlich fließen dabei in die Bestimmung des Schwenkwinkels lediglich die erstabgeschrittenen Scanrichtungen der Scaneinheiten in den jeweiligen Ablenkperioden, die Impulswiederholrate und das Winkelgeschwindigkeitsprofil ein, sodass der Schwenkwinkel von der Topographie der zu vermessenden Umgebung und der Relativgeschwindigkeit zwischen Vorrichtung und Umgebung unabhängig ist.

Die Erfindung wird nachstehend anhand von in den beigeschlossenen Zeichnungen dargestellten Ausführungsbeispielen näher erläutert. In den Zeichnungen zeigen:

Fig. 1 eine auf einem Luftfahrzeug montierte Laserscanvorrichtung und eine ihrer Scaneinheiten beim Aussenden ihres Scanfächers zur Vermessung einer Umgebung in einer schematischen Perspektivansicht;
Fig. 2 einen Sende- und Empfangskanal der Vorrichtung von Fig. 1 in einem Blockschaltbild mit schematisch eingezeichneten Strahlengängen;

die Fig. 3a - 3d vier verschiedene Ausführungsformen der Laserscanvorrichtung jeweils montiert auf einem Luftfahrzeug beim Vermessen einer Umgebung mit drei Scaneinheiten, welche jeweils einen Scanfächer aussenden und jeweils einen Sende- und Empfangskanal bilden, in einer schematischen Perspektivansicht;

Fig. 4 ein beispielhaftes Intensität/Zeit-Diagramm von Impulszügen von Laserimpulsen, die von den Scaneinheiten der Laserscanvorrichtungen der Fig. 3a - 3d ausgesandt werden;

Fig. 5 eine beispielhafte Abtastpunkteverteilung auf der Umgebung, wie sie mit den Scanfächern von Fig. 3a, jedoch ohne erfindungsgemäße Verschwenkung für die Impulszüge von Fig. 4 erhalten würde, in einer Draufsicht;

Fig. 6 die erfindungsgemäße Verschwenkung der Scanfächer der Ausführungsform der Fig. 3a - 3d in Richtung der Scanachsen gesehen;

Fig. 7 eine beispielhafte Abtastpunkteverteilung auf der Umgebung, wie sie mit den verschwenkten Scanfächern von Fig. 6 erhalten wird, in einer Draufsicht;

Fig. 8 ein Intensität/Zeit-Diagramm von zeitlich versetzten Impulszügen von Laserimpulsen, die in einer ersten, elektronisch realisierten Ausführungsform zur Scanfächerverschwenkung bei den Laserscanvorrichtungen der Fig. 3a - 3d verwendet werden;

Fig. 9 die erste, elektronisch realisierte Ausführungsform der Laserscanvorrichtungen der Fig. 3a - 3d in einem Blockschaltbild mit schematisch eingezeichneten Strahlengängen;

die Fig. 10 und 11 verschiedene Varianten einer zweiten, optisch realisierten Ausführungsform der Laserscanvorrichtung der Fig. 3a bzw. 3b einmal in einer Perspektivansicht (Fig. 10) und einmal in Scanachsenrichtung gesehen (Fig. 11) jeweils mit schematisch eingezeichneten Strahlengängen.

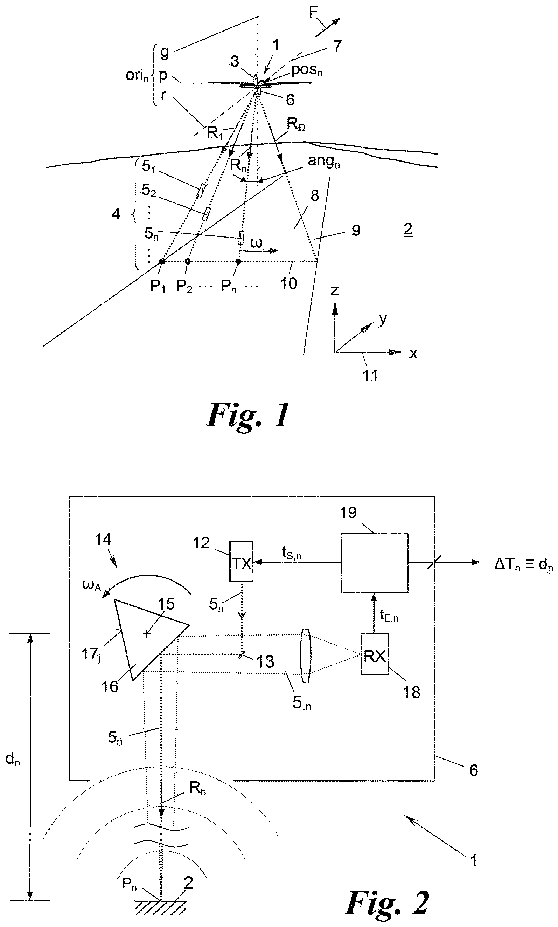

In Fig. 1 ist eine Vorrichtung 1 zum Vermessen einer Umgebung 2 von einem Fahrzeug 3 aus gezeigt. Die zu vermessende Umgebung 2 kann beispielsweise eine Landschaft (Terrain) sein, aber auch der Straßenboden und die Fassaden entlang eines Stra-ßenzugs, die Innenoberfläche einer Halle, eines Tunnels oder Bergwerks, oder die Meeresoberfläche oder der Meeresboden, usw. Bei dem Fahrzeug 3 kann es sich um ein Land-, Luft- oder Wasserfahrzeug handeln, bemannt oder unbemannt. Alternativ könnte die Vorrichtung 1 auch stationär sein und entweder eine ruhende oder eine gegenüber der Vorrichtung 1 relativbewegte Umgebung 2 vermessen, z.B. auf einem Förderband bewegte Gegenstände, Werkstücke, etc.

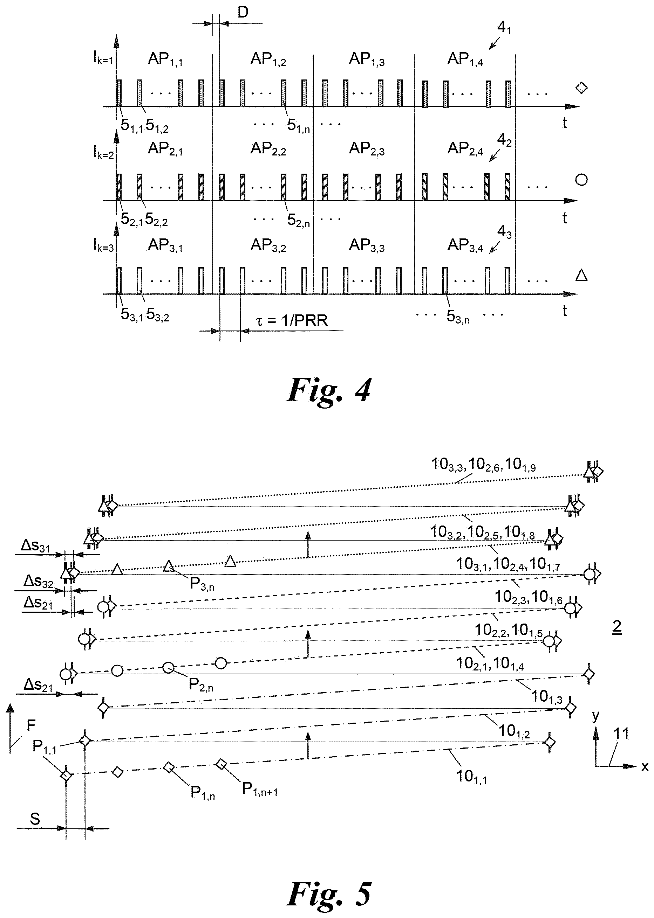

Die Vorrichtung 1 tastet mittels eines ausgesandten Impulszuges 4 von Laserimpulsen $5_n$ (n = 1, 2, ...) die Umgebung 2 zwecks deren Vermessung ab. Dazu werden die Laserimpulse $5_n$ von einer Scaneinheit 6 in Scanrichtungen $R_n$ ausgesandt, die um eine Scanachse 7 mit einer Ablenkperiode AP (siehe dazu später Fig. 4) geschwenkt werden. Dadurch fächern die Scanrichtungen $R_n$ der Laserimpulse $5_n$ innerhalb einer Ablenkperiode AP zwischen einer erstabgeschrittenen Scanrichtung $R_1$ und einer letztabgeschrittenen Scanrichtung $R_\Omega$ einen Scanfächer 8 auf, den sie mit einem Winkelgeschwindigkeitsprofil $\omega$ abschreiten. Das Winkelgeschwindigkeitsprofil $\omega$ ist durch den konkreten Aufbau der Scaneinheit 6 bestimmt und kann entweder über die Ablenkperiode AP konstant sein, d.h. $\omega$ = konst, oder sich innerhalb der Ablenkperiode AP bzw. für Scanrichtungen $R_n$ ändern, d.h. $\omega = \omega(t)$ bzw. $\omega = \omega(R_n)$.

Zusätzlich wird die Vorrichtung 1 in Fortbewegungsrichtung F des Fahrzeugs 3 mit einer Relativgeschwindigkeit v vorwärtsbewegt, um die Umgebung 2 im Wesentlichen in einem Scanstreifen 9 abzutasten. Wenn das Fahrzeug 3 ein Flugzeug ist, ist die Fortbewegungsrichtung F die Hauptflugrichtung des Flugzeugs, für die es gebaut ist. Die Fortbewegungsrichtung F liegt dazu nicht in der Ebene des Scanfächers 8. Im gezeigten Fall ist die Fortbewegungsrichtung F normal zur Ebene des Scanfächers 8, sodass der Scanfächer 8 in Nadir-Richtung des Fahrzeugs 3 liegt und nach unten auf die Umgebung 2 gerichtet ist. Der Scanfächer 8 kann aber auch z.B. um eine Hochachse g des Fahrzeugs 3 verdreht sein, sodass seine Schnittlinien 10 mit der Umgebung 2, die "Scanzeilen", im Scanstreifen 9 schräg zur projizierten Fortbewegungsrichtung F liegen. In gleicher Weise könnte der Scanfächer 8 um eine Nickachse p und/oder Rollachse r des Fahrzeugs 3 verdreht sein.

Jeder Laserimpuls $5_n$ wird von der Vorrichtung 1 zur Umgebung 2 ausgesandt, von dieser an einem Abtastpunkt ("Zielpunkt") $P_n$ der Umgebung 2 zurück zur Vorrichtung 1 reflektiert und von der Scaneinheit 6 empfangen. Aus einer Laufzeitmessung der Laserimpulse $5_n$ können Entfernungsmesswerte $d_n$ von der jeweils aktuellen Position $pos_n$ der Vorrichtung 1 zum jeweiligen Abtastpunkt $P_n$ der Umgebung 2 berechnet werden anhand der bekannten Beziehung

$$d_n = c \cdot \Delta T_n / 2 = c \cdot (t_{E,n} - t_{S,n}) / 2 \qquad\qquad (3)$$

mit

$t_{S,n}$   Sendezeitpunkt des Laserimpulses $5_n$,
$t_{E,n}$   Empfangszeitpunkt des Laserimpulses $5_n$ und
c   Lichtgeschwindigkeit.

In Kenntnis der jeweiligen Position $pos_n$ der Vorrichtung 1 bei Aussendung des Laserimpulses $5_n$ in einem lokalen oder globalen x/y/z-Koordinatensystem 11 der Umgebung 2, der jeweiligen Orientierung $ori_n$ der Vorrichtung 1 im Koordinatensystem 11, angegeben z.B. durch die Kipp-, Roll- und Gierwinkel des Fahrzeugs 3 um seine Quer-, Längs- und Hochachsen p, r, g, und der jeweiligen Winkellage $ang_n$ des Laserimpulses $5_n$ in Richtung auf den Punkt $P_n$ bezüglich des Fahrzeugs 3 kann dann aus dem jeweiligen Entfernungsmesswert $d_n$ die Position des Abtastpunkts $P_n$ im Koordinatensystem 11 berechnet werden. Eine Vielzahl solcherart vermessener und berechneter Abtastpunkte $P_n$ bildet die Umgebung 2 in Form einer "3D-Punktwolke" im Koordinatensystem 11 ab.

Fig. 2 zeigt das Laufzeit-Messprinzip der Vorrichtung 1 in einem Sende/Empfangs-Kanal der Vorrichtung 1, welcher für die in Fig. 1 beispielhaft dargestellten Scanfächer 8 der Scaneinheit 6 zuständig ist.

Gemäß Fig. 2 werden die Laserimpulse $5_n$ in jedem Sende/Empfangs-Kanal der Vorrichtung 1 von einem Lasersender 12 über einen Umlenkspiegel 13 und eine Ablenkeinrichtung 14 ausgesandt. In Fig. 2 ist die Ablenkeinrichtung 14 ein sich um seine Prismenachse 15 mit einer vorgebbaren Winkelgeschwindigkeit $\omega_A$ drehendes Spiegelprisma 16, dessen Mantelseiten jeweils eine Spiegelfläche $17_j$ (j = 1, 2, ..., J) bilden und dessen Prismenachse 15 die Scanachse 7 ist. Dabei geben die konstante oder variable Winkelgeschwindigkeit $\omega_A$ und die Anzahl J an Spiegelflächen $17_j$ das genannte Winkelgeschwindigkeitsprofil $\omega$ und die Dauer $T_{AP}$ einer Ablenkperiode AP gemäß den Formeln $\omega = 2 \cdot \omega_A$ und $AP = 360°/(\omega_{A,d} \cdot J)$, wobei $\omega_{A,d}$ die durchschnittliche Winkelgeschwindigkeit $\omega_A$ bezeichnet, vor. Alternativ könnte die Ablenkeinrichtung 14 durch jede andere im Stand der Technik bekannte Ablenkeinrichtung ausgeführt sein, z.B. als schwingender Spiegel, rotierende Spiegelpyramide, etc. Ebenso könnte auch der Lasersender 12 nicht-normal zur Prismenachse 15 auf die Ablenkeinrichtung 14 senden, wodurch beispielsweise das Winkelgeschwindigkeitsprofil $\omega$ sich gemäß der Formel $\omega = G \cdot \omega_A$ berechnet, wobei G ein geometrischer Projektionsfaktor $G \neq 2$ ist.

Die ausgesandten Laserimpulse $5_n$ werden nach einer Reflexion am jeweiligen Umgebungspunkt $P_n$ auf demselben Weg über die Ablenkeinrichtung 14 zurückerhalten und treffen auf einem Laserempfänger 18 auf, d.h. die aktuelle Blickrichtung des Laserempfängers 18 ist gleich der aktuellen Scanrichtung $R_n$. Die Sendezeitpunkte $t_{S,n}$ der Laserimpulse $5_n$ und die Empfangszeitpunkte $t_{E,n}$ der umgebungsreflektierten Laserimpulse $5_n$ werden einem Entfernungs-Rechner 19 zugeführt, der daraus anhand der Gleichung (3) die jeweilige Entfernung $d_n$ berechnet.

Die Impulsrate (pulse repetition rate, PRR) der Laserimpulse $5_n$ ist konstant oder kann z.B. zur Auflösung von MTA- (multiple time around) -Mehrdeutigkeiten innerhalb einer Ablenkperiode AP moduliert werden, um die Zuordnung von gesendeten und empfangenen Laserimpulsen $5_n$ zueinander zu erleichtern, wie in der Technik bekannt.

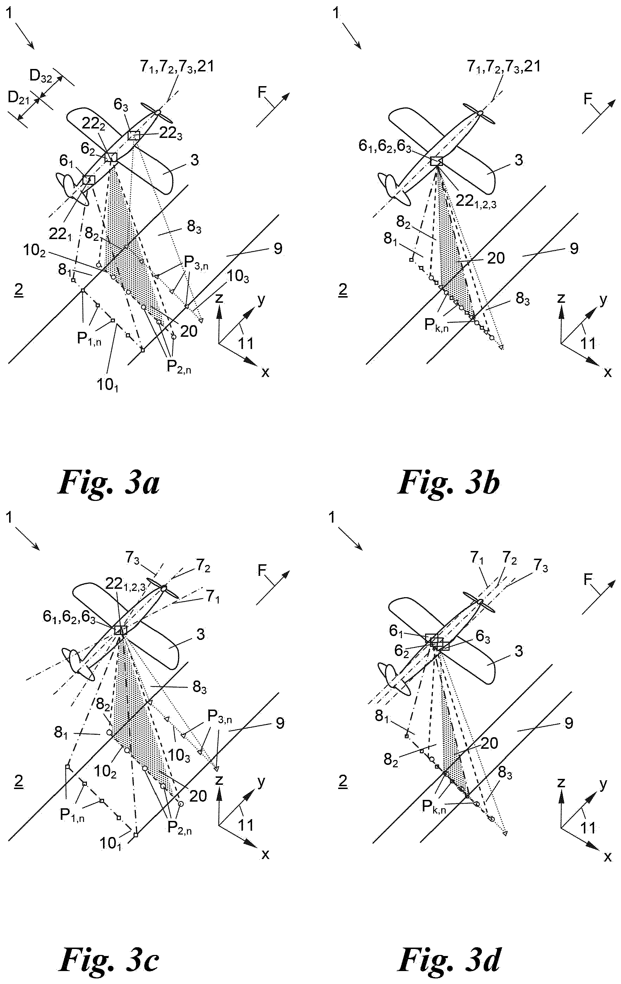

In den Fig. 1 und 2 wurden zur Erklärung des Messprinzips nur die Scanfächer 8 einer Scaneinheit 6 der Vorrichtung 1 bzw. der zugehörige Sende-/Empfangskanal gezeigt. Die Fig. 3a - 3d zeigen dagegen jeweils die auf dem Flugzeug 3 mitgeführte Laserscan-Vorrichtung 1 mit mehreren (hier: drei) wie in Zusammenhang mit den Fig. 1 und 2 beschriebenen Scaneinheiten $6_k$ (k = 1, 2, ..., K; hier K = 3), d.h. in einer vorgegebenen Reihung einer "ersten", "zweiten" und "dritten" Scaneinheit $6_1$, $6_2$, $6_3$. Es versteht sich, dass die Vorrichtung 1 eine beliebige Anzahl K > 1 an Scaneinheiten $6_k$ haben kann.

Jede der drei Scaneinheiten $6_k$ sendet wiederholt ihren jeweiligen Impulszug $4_k$ von Laserimpulsen $5_{k,n}$ mit derselben Impulswiederholrate PRR in Scanrichtungen $R_{k,n}$ aus, die um eine jeweilige Scanachse $7_k$ aufgefächert sind. Pro Ablenkperiode AP spannen die Scanrichtungen $R_{k,n}$ einer Scaneinheit $6_k$ somit jeweils einen zugehörigen Scanfächer $8_k$ auf und schreiten diesen mit demselben Winkelgeschwindigkeitsprofil $\omega$ ab.

In der Ausführungsform von Fig. 3a liegen die Scanachsen $7_k$ der Scanfächer $8_k$ auf einer gemeinsamen Geraden 21, d.h. sie fallen zusammen, und sind in Richtung der Geraden 21 mit gegenseitigen Abständen $D_{k,k-1}$ voneinander beabstandet. Dadurch sind die Scanfächer $8_k$ der Scaneinheiten $6_k$ parallel. In der Ausführungsform von Fig. 3b fallen sowohl die Scanachsen $7_k$ der Scanfächer $8_k$ als auch deren Scheitelpunkte $22_k$ zusammen, d.h. die Scanfächer $8_k$ liegen in einer gemeinsamen Ebene und gehen von einem gemeinsamen Scheitelpunkt $22_{1,2,3}$ aus. In der Ausführungsform Fig. 3c gehen die Scanfächer $8_k$ von einem gemeinsamen Scheitelpunkt $22_{1,2,3}$ aus, sind aber nicht parallel, sondern voneinander divergierend, d.h. ihre Scanachsen $7_k$ fallen nicht zusammen, schneiden sich jedoch im gemeinsamen Scheitelpunkt $22_{1,2,3}$. In der Ausführungsform von Fig. 3d sind die Scanfächer $8_k$ parallel und in einer Ebene angeordnet, ihre Scheitelpunkte $22_k$ sind jedoch voneinander beabstandet.

In jeder dieser Ausführungsformen der Fig. 3a - 3d überlappen die Scanfächer $8_k$ einander in Richtung einer der Scanachsen $7_k$ gesehen im Wesentlichen in einem gemeinsamen Überlappungsbereich 20 (schraffiert), in welchem somit in Richtung dieser Scanachse $7_k$ gesehen die Abtastpunkte $P_{k,n}$ mehrerer Scanfächer $8_k$ zu liegen kommen. Dadurch scannen jene Scanfächer $8_k$, welche in einer Ebene liegen (Fig. 3b und 3d), den Überlappungsbereich 20 konstruktionsbedingt in derselben Ablenkperiode AP; und bei jenen Scanfächern $8_k$, welche nicht in derselben Ebene liegen (Fig. 3a und 3c), verfolgt ein in Richtung einer der Scanachsen $7_k$ gesehen hinterer ("trailing") Scanfächer $8_{k-1}$ wegen der Relativbewegung zwischen Vorrichtung 1 und Umgebung 2 einen in dieser Richtung gesehen vorderen ("leading") Scanfächer $8_k$ und scannt dessen bereits vermessenen Teil des gemeinsamen Scanstreifens 9 erneut. So scannt z.B. in den Fig. 3a und 3c der hintere Scanfächer $8_1$ die Scanzeilen $10_2$, $10_3$ seiner beiden vorderen Scanfächer $8_2$, $8_3$, und der hintere Scanfächer $8_2$ die Scanzeilen $10_3$ seines vorderen Scanfächers $8_3$ erneut.

Die Scanfächer $8_k$ sind nicht notwendigerweise eben. Beispielsweise können in der Fig. 3c die in Fortbewegungsrichtung F nach vorne bzw. nach hinten geneigten Scanfächer $8_1$, $8_3$ - z.B. aufgrund des Ablenkmechanismus der Laserimpulse $5_{k,n}$ - auf schwach gekrümmten Kegelmantelflächen liegen. Dies kann für die Zwecke der vorliegenden Erfindung unberücksichtigt bleiben.

Anstelle wie in den Fig. 3a - 3d dargestellt könnten die Scanfächer $8_k$ auch in beliebiger anderer Lage zueinander liegen, solange sie einander zumindest paarweise jeweils in einem Überlappungsbereich 20 überlappen.

Die Fig. 4 und 5 illustrieren ein unkoordiniertes Aussenden der Impulszüge $4_k$ jeder einzelnen Scaneinheit $6_k$, d.h. jeweils ohne Berücksichtigung der anderen Scaneinheiten $6_k$. Dazu sind in Fig. 4 die Intensitäten $I_k$ der Laserimpulse $5_{k,n}$ für jede Scaneinheit $6_k$ über der Zeit t für mehrere Ablenkperioden $AP_{k,p}$ (p = 1, 2, ...) ihrer Ablenkeinrichtung $14_k$ aufgetragen. In Fig. 5 sind die damit erzeugten Scanzeilen $10_{k,p}$ der Scaneinheiten $6_k$ für mehrere Ablenkperioden $AP_{k,p}$ dargestellt.

Die Impulszüge $4_k$ werden im gezeigten Beispiel synchron mit derselben Impulswiederholrate PRR, d.h. mit einem Impulsabstand $\tau$ = 1/PRR, ausgesandt. Je nach Größe von Impulsabstand $\tau$, Ablenkperiode $AP_{k,p}$, Relativgeschwindigkeit v und Lage der Scanfächer $8_k$ stellen sich dadurch unterschiedliche Verteilungen der Abtastpunkte $P_{k,n}$ ein: Wenn die Ablenkperiodendauer $T_{AP}$ ein Vielfaches des Impulsabstandes $\tau$ ist, also $T_{AP} = m \cdot \tau$ (m ... eine natürliche Zahl), kommen die Laserimpulse $5_{k,n}$ innerhalb jeder Ablenkperiode $AP_{k,p}$ gleich zu liegen. Dadurch fallen die Scanrichtungen $R_{k,n}$ unterschiedlicher Ablenkperioden $AP_{k,p}$ einer Scaneinheit $6_k$ zusammen und liegen in Fortbewegungsrichtung F gesehen hintereinander. Wenn dabei die Winkelgeschwindigkeit $\omega_A$ der Ablenkeinrichtung 14 und/oder die Relativgeschwindigkeit v an eine gemessene oder erwartete Entfernung $d_{k,n}$ angepasst wird/werden, kann es je nach Größe dieser Werte und der Topographie der Umgebung 2 passieren, dass die Abtastpunkte $P_{1,n}$ (als Rauten dargestellt) und $P_{2,n}$ (als Kreise dargestellt) der hinteren Scanfächer $8_1$, $8_2$ mit den bereits gescannten Abtastpunkten $P_{3,n}$ (als Dreiecke dargestellt) des vorderen Scanfächers $8_3$ zusammenfallen.

Wenn die Ablenkperiode $T_{AP}$ kein Vielfaches des Impulsabstandes $\tau$ ist, also $T_{AP} \neq m \cdot \tau$, verschieben sich die Laserimpulse $5_{k,n}$ von Ablenkperiode $AP_{k,p}$ zu Ablenkperiode $AP_{k,p+1}$ um eine zeitliche Drift D (Fig. 4), welche die Scanfächer $8_k$ aufeinanderfolgender Ablenkperioden $AP_{k,p}$ ein und derselben Scaneinheit $6_k$ jeweils um die zugehörige Scanachse $7_k$ verschwenkt, so dass z.B. die erstabgetasteten Punke $P_{k,1}$ aufeinanderfolgender Ablenkperioden $AP_{k,p}$, $AP_{k,p+1}$ einer Scaneinheit $6_k$ in Fortbewegungsrichtung F gesehen einen dementsprechenden Ortsversatz S (Fig. 5) erleiden. Wenn nun durch die gemeinsame Fortbewegung der Scaneinheiten $6_k$ in Fortbewegungsrichtung F sich die Scanzeilen $10_k$ einer "hinteren" Scaneinheit $6_k$ über vorherige Scanzeilen $10_{k+1}$ einer "vorderen" Scaneinheit $6_{k+1}$ zu schieben beginnen, wie das in Fig. 4 und 5 für drei beispielhafte Scaneinheiten $6_1$, $6_2$, $6_3$ gezeigt ist, dann passiert in der Regel Folgendes: Beim mehrfachen Abtasten einer Scanzeile 10, z.B. einmal als erste Scanzeile $10_{3,1}$ der dritten ("vorderen") Scaneinheit $6_3$ in deren erster Ablenkperiode $AP_{3,1}$, einmal als vierte Scanzeile $10_{2,4}$ der zweiten ("mittleren") Scaneinheit $6_2$ in deren vierter Ablenkperiode $AP_{2,4}$ und einmal als siebte Scanzeile $10_{1,7}$ der ersten ("hinteren") Scaneinheit $6_1$ in deren siebter Ablenkperiode $AP_{1,7}$, sind die erstabgeschrittenen Scanrichtungen $R_{1,1}$, $R_{2,1}$, $R_{3,1}$ der Scaneinheiten $6_1$, $6_2$, $6_3$ beim Abtasten dieser Scanzeile 10 gegeneinander jeweils um eine Winkeldifferenz $\Delta\varphi_{21}$, $\Delta\varphi_{31}$, $\Delta\varphi_{32}$ versetzt, sodass die Scanrichtungen $R_{k,n}$ aller Scaneinheiten $6_k$ den Überlappungsbereich 20 in der mehrfach abgetasteten Scanzeile 10 bzw. (hier:) $10_{3,1}$, $10_{2,4}$, $10_{1,7}$ in unregelmäßigen Winkelabständen scannen. Dadurch kommen die Abtastpunkte $P_{3,n}$, $P_{2,n}$ bzw. $P_{1,n}$ innerhalb dieser Scanzeile 10 bzw. $10_{3,1}$, $10_{2,4}$, $10_{1,7}$ jeweils unterschiedlich zu liegen, wodurch die Ortsabstände $\Delta s_{21}$, $\Delta s_{31}$, $\Delta s_{32}$ zwischen den zugehörigen Abtastpunkten $P_{1,n}$, $P_{2,n}$, $P_{3,n}$ der Scaneinheiten $6_1$, $6_2$, $6_3$ unregelmäßig sind.

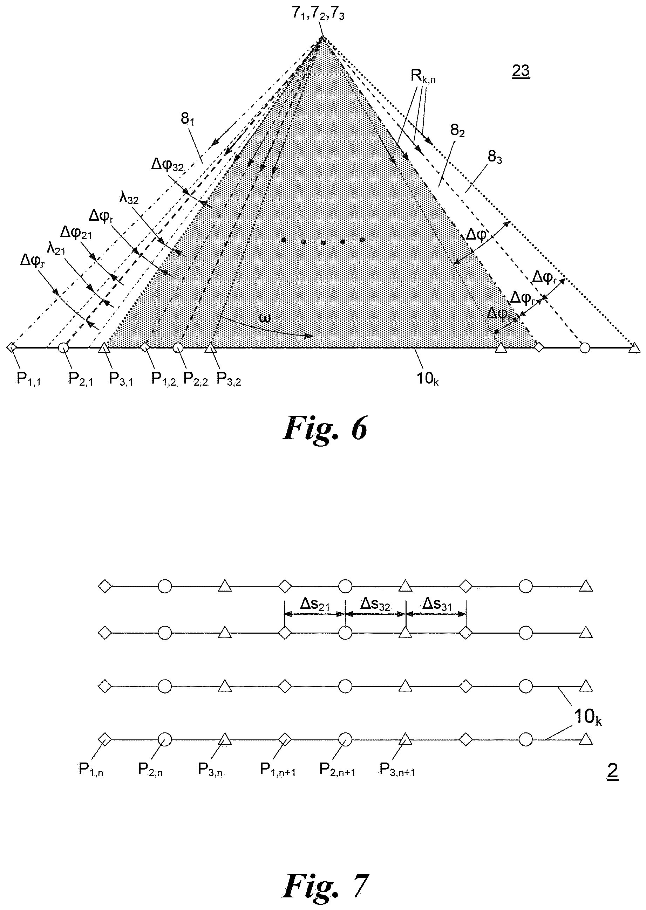

Die Fig. 6 und 7 illustrieren, wie ein solches Zusammenfallen oder unregelmäßiges Nebeneinanderfallen der Abtastpunkte $P_{k,n}$ unterschiedlicher Scanfächer $8_k$ verhindert und die Abtastpunkte $P_{k,n}$ gleichmäßiger über die Umgebung 2 verteilt werden können.

Dazu werden, wie in Fig. 6 dargestellt, die Scanfächer $8_2$ der zweiten Scaneinheit $6_2$ gegenüber den Scanfächern $8_1$ der benachbarten ersten Scaneinheit $6_1$ und die Scanfächer $8_3$ der dritten Scaneinheit $6_3$ gegenüber den Scanfächern $8_2$ der benachbarten zweiten Scaneinheit $6_2$ jeweils um einen Schwenkwinkel $\lambda_{21}$ bzw. $\lambda_{32}$ um ihre jeweilige Scanachse $7_k$ verschwenkt. Es sei erwähnt, dass die Reihung der Scaneinheiten $6_k$ beliebig ist, d.h. welche der Scaneinheiten $6_k$ als "erste", "zweite", "dritte" usw. bezeichnet wird, ist beliebig. Der Ausdruck "benachbarte" Scaneinheit $6_k$ ist demgemäß nicht im örtlichen Sinne sondern in einem numerischen Sinne in dieser beliebig vorgegebenen Reihung zu verstehen.

Beispielsweise werden bei drei Scaneinheiten $6_1$, $6_2$, $6_3$ die Schwenkwinkel $\lambda_{21}$ und $\lambda_{32}$ so gewählt, dass sie mit der zugehörigen, durch die Drift D verursachten Winkeldifferenz $\Delta\varphi_{21}$, $\Delta\varphi_{32}$ ein Drittel des Winkels $\Delta\varphi$ zwischen zwei aufeinanderfolgend abgeschrittenen Scanrichtungen $R_{k,n}$ eines Scanfächers $8_k$ ergeben, wodurch die Scanrichtungen $R_{k,n}$ aller Scanfächer $8_1$, $8_2$, $8_3$, wenn sie ein und dieselbe Ebene 23 im Koordinatensystem 11 bezüglich der Umgebung 2 durchschritten ("eingenommen") haben, dort in regelmäßigen Winkelabständen $\Delta\varphi_r = \Delta\varphi/3$ um die Scanachse $7_k$ angeordnet sind. Der Winkel $\Delta\varphi$ kann als $\Delta\varphi = \omega$/PRR bestimmt werden. Insbesondere entspricht der Schwenkwinkel $\lambda_{k,k-1}$, vermehrt um die Winkeldifferenz $\Delta\varphi_{k,k-1}$ zwischen den in diesen zwei Scanfächern $8_k$, $8_{k-1}$ jeweils erstabgeschrittenen Scanrichtungen $R_{k,1}$ und $R_{k-1,1}$, dem Winkel $\Delta\varphi$ zwischen zwei in einem Scanfächer $8_k$ aufeinanderfolgend abgeschrittenen Scanrichtungen $R_{k,n}$ dividiert durch die Anzahl K aller Scaneinheiten $6_k$, optional vermehrt um ein

Vielfaches dieses Winkels $\Delta\varphi$, z.B. ein i-faches $i \cdot \Delta\varphi = i \cdot \omega / PRR$, wobei i eine ganze Zahl ist.

Wird zusätzlich die Impulswiederholrate PRR von einer gemessenen oder erwarteten Entfernung $d_{k,n}$ zur Umgebung 2 abhängig gewählt und innerhalb der Ablenkperiode $AP_{k,p}$ verändert, können die in Fig. 7 gezeigten, über die ganze Scanzeile $10_k$ regelmäßigen Abstände $\Delta s_{21}$, $\Delta s_{31}$, $\Delta s_{32}$ erhalten werden.

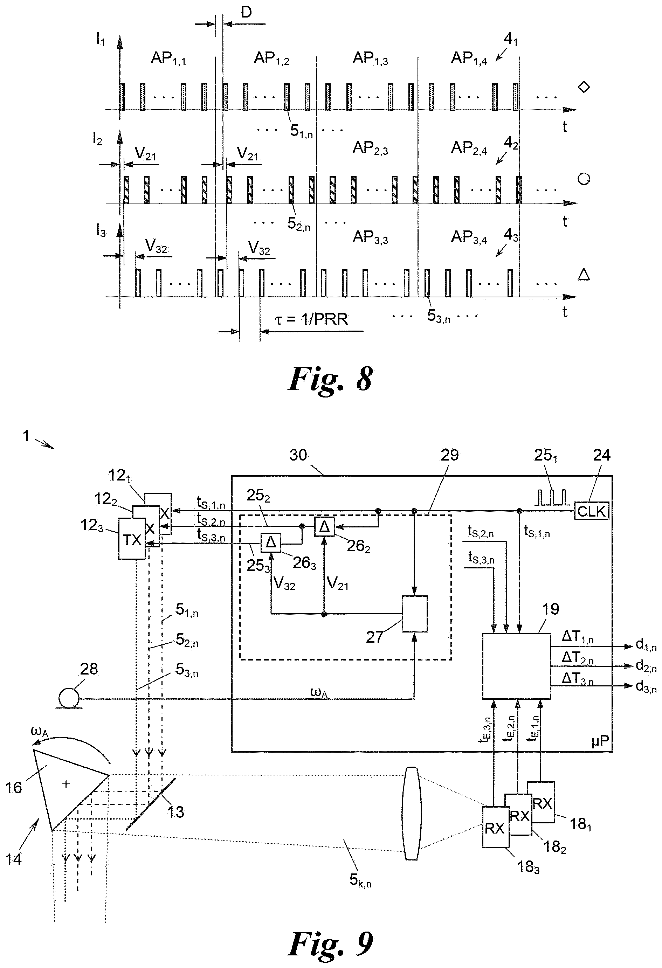

Die Fig. 8 und 9 zeigen eine erste praktische Ausführungsform zur Verschwenkung der Scanfächer $8_k$ auf die in Fig. 6 und 7 beschriebene Art und Weise, u.zw. mittels eines elektronisch erzeugten zeitlichen Versatzes $V_k$ der Impulszüge $4_k$ der Scaneinheiten $6_k$.

Fig. 8 zeigt die solcherart versetzten Impulszüge $4_k$ und Fig. 9 das Blockschaltbild einer solchen elektronischen Realisierung einer dreikanaligen Vorrichtung 1 gemäß den Ausführungsbeispielen 3a - 3d. Jede Scaneinheit $6_k$ umfasst einen Lasersender $12_k$ und einen zugehörigen Laserempfänger $18_k$, die über eine allen Scaneinheiten $6_k$ gemeinsame Ablenkeinrichtung 14 - jeweils wie in Fig. 2 für einen Kanal gezeigt - zusammenwirken und an einen gemeinsamen Entfernungs-Rechner 19 angeschlossen sind, der die jeweiligen Entfernungen $d_{k,n}$ zu den Abtastpunkten $P_{k,n}$ berechnet. Ein Taktgenerator 24 erzeugt einen Steuerimpulszug $25_1$ für den Lasersender $12_1$ der ersten Scaneinheit $6_1$, welcher daraus den ersten Impulszug $4_1$ erzeugt. Verzögerungsglieder $26_2$, $26_3$ verzögern den Steuerimpulszug $25_1$ in Kaskade jeweils um einen zeitlichen Versatz $V_{21}$ bzw. $V_{32}$ und führen die solcherart verzögerten Steuerimpulszüge $25_2$, $25_3$ den Lasersendern $12_2$, $12_3$ zu, welche daraus die Impulszüge $4_2$, $4_3$ der zweiten und dritten Scaneinheiten $6_2$, $6_3$ erzeugen.

Der in den Verzögerungsgliedern $26_2$, $26_3$ jeweils anzuwendende zeitliche Versatz $V_{21}$, $V_{32}$ wird von einem Versatz-Rechner 27 vorgegeben. Der Versatz-Rechner 27 erhält z.B. den Steuerimpulszug $25_1$ vom Taktgenerator 24 und die Winkelgeschwindigkeit $\omega_A$ der Ablenkeinrichtung 14 von einem Winkelgeschwindigkeitssensor 28 und bestimmt daraus die Impulswiederholrate PRR bzw. das aktuelle Winkelgeschwindigkeitsprofil $\omega$ und davon abhängig die zeitlichen Versätze $V_{21}$, $V_{32}$.

Der Versatz-Rechner 27 mit den Verzögerungsgliedern $26_2$, $26_3$ kann somit auch als eine Steuereinrichtung 29 angesehen werden, welche die Impulszüge $4_k$ der Scaneinheiten $6_k$ gegeneinander zeitlich versetzt und damit die Scanfächer $8_k$ um ihre Scanachsen $7_k$ verschwenkt, u.zw. die zweiten Scanfächer $8_2$ gegenüber den ersten Scanfächern $8_1$ um den Winkelversatz $\lambda_{21}$ und die dritten Scanfächer $8_3$ gegenüber den zweiten Scanfächern $8_2$ um den Winkelversatz $\lambda_{32}$.

Die Steuereinrichtung 29 kann gemeinsam mit dem Entfernungs-Rechner 19 in einem Prozessorsystem 30 implementiert sein, u.zw. in Hard- und/oder Software.

Insbesondere kann der Versatz-Rechner 27 die zeitlichen Versätze $V_{21}$, $V_{32}$ für die Ausführungsform von Fig. 3b für eine Winkel-Vergleichmäßigung von Fig. 6 gemäß der folgenden Formel vorgeben:

$$V_{k,k-1} = \frac{1}{K \cdot PRR} + i \cdot \frac{1}{PRR} - \frac{1}{\omega}\left[\left(R_{k,1,p} - R_{k-1,1,p}\right) \mathrm{mod}\, \frac{\omega}{PRR}\right] \qquad (4)$$

mit

K        Anzahl der Scanfächer $8_k$,
$V_{k,k-1}$    zeitlicher Versatz des k-ten Impulszuges gegenüber dem (k-1)-ten Impulszug (k = 1 ... K),
$\omega$        durchschnittliche Winkelgeschwindigkeit des Winkelgeschwindigkeitsprofils,
PRR     Impulswiederholrate,
i          eine ganze Zahl,
$R_{k,1,p}$    erstabgeschrittene Scanrichtung des k-ten Lasersenders $12_k$ in einer Referenz-Ablenkperiode $AP_{k,p}$,
v         Relativgeschwindigkeit zwischen Vorrichtung 1 und Umgebung 2,
mod     Modulo-Operator.

Optional kann der Versatz-Rechner 27 den anzuwendenden zeitlichen Versatz $V_{21}$, $V_{32}$ auch abhängig von weiteren Werten, z.B. der Relativgeschwindigkeit v, einer gemessenen oder erwarteten Entfernung $d_{k,n}$ oder den Lagen der Scaneinheiten $6_k$, d.h. deren Positionen und Orientierungen, usw. bestimmen. Dabei kann der Versatz-Rechner 27 die zeitlichen Versätze $V_{21}$, $V_{32}$ für die Ausführungsform von Fig. 3a für eine Winkel-Vergleichmäßigung von Fig. 6 gemäß der folgenden Formel vorgeben:

$$V_{k,k-1} = \frac{1}{K \cdot PRR} + i \cdot \frac{1}{PRR} - \frac{1}{\omega}\left[\left(R_{k,1,p} - R_{k-1,1,p} + \left[\omega \cdot \frac{D_{k,k-1}}{v} \mathrm{mod}(\omega \cdot T_{AP})\right]\right) \mathrm{mod}\, \frac{\omega}{PRR}\right] \qquad (5)$$

mit

| K | Anzahl der Scanfächer $8_k$, |
|---|---|
| $V_{k,k-1}$ | zeitlicher Versatz des k-ten Impulszuges gegenüber dem (k-1)-ten Impulszug (k = 1 ... K), |
| $\omega$ | durchschnittliche Winkelgeschwindigkeit des Winkelgeschwindigkeitsprofils, |
| PRR | Impulswiederholrate, |
| i | eine ganze Zahl, |
| $R_{k,1,p}$ | erstabgeschrittene Scanrichtung des k-ten Lasersenders $12_k$ in einer Referenz-Ablenkperiode $AP_{k,p}$, |
| $D_{k,k-1}$ | Distanz zwischen dem k-ten und (k-1)-ten Scanfächer $8_k$, |
| v | Relativgeschwindigkeit zwischen Vorrichtung 1 und Umgebung 2, |
| $T_{AP}$ | Ablenkperiodendauer und |
| mod | Modulo-Operator. |

Alternativ kann die Steuereinrichtung 29 auch jeder Scaneinheit $6_k$ innerhalb jeder Ablenkperiode $AP_{k,p}$ fixe, auf die Ablenkperiode $AP_{k,p}$ bezogene Aussendezeitpunkte $t_{S,k,n}$ zuteilen, z.B. indem sie die Impulszüge $4_k$ jeder Scaneinheit $6_k$ pro Ablenkperiode $AP_{k,p}$ um einen zeitlichen Versatz $V_k$ verschiebt, den sie gemäß $V_k$ = (k-1)/(K·PRR) - D bestimmt, wobei D die Drift zwischen zwei aufeinanderfolgenden Ablenkperioden $AP_{k,p}$, $AP_{k,p+1}$ ist. Dazu könnte die Steuereinrichtung 29 auch mit der ersten Scaneinheit $6_1$ verbunden sein, um deren Scanfächer $8_1$ ebenfalls zu verschwenken.

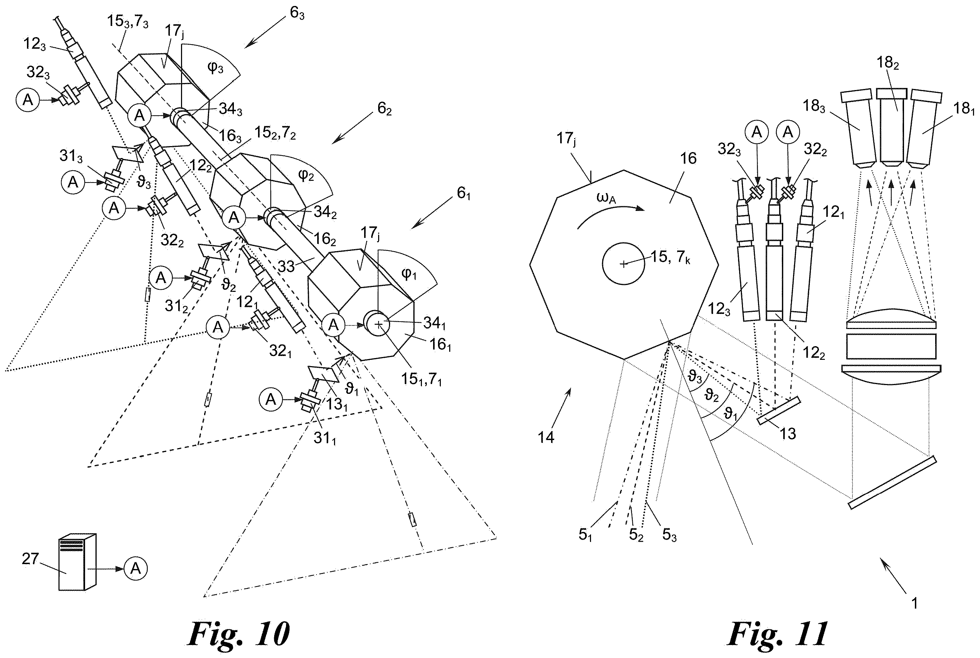

Die Fig. 10 und 11 zeigen eine zweite praktische Ausführungsform zur Verschwenkung der Scanfächer $8_k$ mittels einer Steuereinrichtung 29, die anstelle von Verzögerungsgliedern $26_2$, $26_3$ für zeitliche Versätze nun verstellbare optische Elemente, z.B. elektrooptische Elemente, Spiegel, Prismen, etc. im Strahlengang der Laserimpulse $5_{k,n}$ der jeweiligen Scanfächer $8_k$ enthält. Dies wird nachfolgend in drei beispielhaften Varianten anhand der Fig. 10 und 11 illustriert, die jeweils einen möglichen mechanischen Aufbau der Ausführungsformen von Fig. 3a bzw. 3b zeigen.

In einer ersten, in Fig. 10 gezeigten Variante enthält die Steuereinrichtung 29 jeweils einen vom Versatz-Rechner 27 gesteuerten Aktuator $31_k$ für jede Scaneinheit $6_k$, der die Lage ihres Umlenkspiegels $13_k$ verstellen kann. Dadurch wird eine jeweilige Senderichtung $\vartheta_k$ auf das gemeinsame Spiegelprisma 16 oder das jeweilige Spiegelprisma $16_k$ normal zur Scanachse $7_k$ verändert.

In einer zweiten, ebenfalls in Fig. 10 sowie in Fig. 11 gezeigten Variante sind die Lasersender $12_k$ verstellbar gelagert und der Versatz-Rechner 27 steuert Aktuatoren $32_k$, die die Position und/oder Orientierung, d.h. die Lage, des jeweiligen Lasersenders $12_k$ gegenüber dem gemeinsamen oder jeweiligen Spiegelprisma $16_k$ und damit die Senderichtung $\vartheta_k$ verändern können.

Es versteht sich, dass zur Laufzeitmessung die Laserimpulse $5_{k,n}$ der verschwenkten Scanfächer $8_k$ auch in der ersten und zweiten Variante von den zugehörigen Laserempfängern $18_k$ empfangen werden müssen. Dazu weisen diese Laserempfänger $18_k$ in einer Ausführungsform eine Empfangsapertur auf, welche so groß ist, dass die reflektierten Laserimpulse $5_{k,n}$ sie trotz des Verschwenkens des zugehörigen Scanfächers $8_k$ passieren. In einer alternativen Ausführungsform behalten diese Laserempfänger $18_k$ ihre z.B. optimal angepasste Empfangsapertur bei und die Blickrichtungen dieser Laserempfänger $18_k$ werden mit dem zugehörigen Scanfächer $8_k$ mitverschwenkt. Für dieses Mitverschwenken könnte die Steuereinrichtung 29 - wie in der ersten bzw. zweiten Variante für den Sendekanal beschrieben - mittels Aktuatoren verstellbare optische Elemente im Empfangskanal oder die Lage dieser Laserempfänger $18_k$ selbst steuern.

In einer dritten, ebenfalls in Fig. 10 gezeigten Variante steuert der Versatz-Rechner 27 auf einer gemeinsamen Antriebswelle 33 der Spiegelprismen $16_k$ gelagerte Aktuatoren $34_k$, mit denen die Spiegelprismen $16_k$ jeweils individuell gegenüber der Antriebswelle 33 verdreht werden können, um die Phasenlage $\varphi_{k,k-1} = \varphi_k - \varphi_{k-1} = \lambda_{k,k-1}/2$ zwischen zwei Spiegelprismen $16_k$, $16_{k-1}$ einzustellen. Damit werden wieder die Scanfächer $8_k$ unterschiedlicher Scaneinheiten $6_k$ gegeneinander verschwenkt.

In den genannten Varianten bildet somit der Versatz-Rechner 27 gemeinsam mit den Aktuatoren $31_k$, $32_k$, $34_k$ die Steuereinrichtung 29, welche die Scanfächer $8_k$ der Scaneinheiten $6_k$ um ihre Scanachsen $7_k$ verschwenkt.

Für eine Winkel-Vergleichmäßigung der Scanrichtungen $R_{k,n}$ kann in jeder der genannten drei Varianten der Schwenkwinkel $\lambda_{k,k-1}$ beispielsweise bestimmt werden als

$$\lambda_{k,k-1} = \frac{\omega}{K \cdot PRR} + i \cdot \frac{\omega}{PRR} - \left( 2 \cdot (\vartheta_k - \vartheta_{k-1}) + \left[ \omega \cdot \frac{D_{k,k-1}}{v} \bmod \frac{360° \cdot 2}{J} \right] \right) \bmod \frac{\omega}{PRR} \qquad (1)$$

bzw. in der Ausführungsform von Fig. 11 mit $D_{k,k-1}$=0 als

$$\lambda_{k,k-1} = \frac{\omega}{K \cdot PRR} + i \cdot \frac{\omega}{PRR} - \left[ 2 \cdot (\vartheta_k - \vartheta_{k-1}) \bmod \frac{\omega}{PRR} \right] \qquad (6)$$

bzw. allgemein für parallele Scanfächer $8_k$, auch wenn die Senderichtungen $\vartheta_k$ nicht-normal auf die Prismenachse 15 stehen, als

$$\lambda_{k,k-1} = \frac{\omega}{K \cdot PRR} + i \cdot \frac{\omega}{PRR} - \left[ (R_{k,1,p} - R_{k-1,1,p'}) \bmod \frac{\omega}{PRR} \right] \qquad (2)$$

mit

| | |
|---|---|
| K | Anzahl der Scanfächer $8_k$, |
| $\lambda_{k,k-1}$ | Schwenkwinkel des k-ten Scanfächers $8_k$ gegenüber dem (k-1)-ten Scanfächer $8_{k-1}$ (k = 1 ... K), |
| $\omega$ | durchschnittliche Winkelgeschwindigkeit des Winkelgeschwindigkeitsprofils, |
| PRR | Impulswiederholrate, |
| i | eine ganze Zahl, |
| $\vartheta_k$ | Senderichtung des k-ten Lasersenders $12_k$, |
| $R_{k,1,p}$ | erstabgeschrittene Scanrichtung der k-ten Scaneinheit $6_k$ in einer Referenz-Ablenkperiode $AP_{k,p}$, |
| $R_{k-1,1,p'}$ | erstabgeschrittene Scanrichtung der (k-1)-ten Scaneinheit $6_{k-1}$ in jener Ablenkperiode $AP_{k-1,p'}$, in welcher ihr Scanfächer $8_{k-1}$ im Wesentlichen dieselbe Ebene 23 im Koordinatensystem 11 einnimmt wie der Scanfächer $8_k$ der k-ten Scaneinheit $6_k$ in der Referenz-Ablenkperiode $AP_{k,p}$, |
| $D_{k,k-1}$ | Distanz zwischen dem k-ten und (k-1)-ten Scanfächer $8_k$ entlang der Prismenachse $15_k$, |
| v | Relativgeschwindigkeit zwischen Vorrichtung 1 und Umgebung 2, |
| J | Anzahl der Spiegelflächen $17_j$ und |
| mod | Modulo-Operator. |

Es versteht sich, dass in Gleichungen (1) und (2) bzw. (4), (5) und (6) eine Darstellung der Senderichtungen $\vartheta_k$ bzw. der erstabgeschrittenen Scanrichtungen $R_{k,1,p}$ jeweils als Skalar zu wählen ist, z.B. als Richtungswinkel in einer für alle Scanfächer $8_k$ gemeinsamen Projektions-Ebene, beispielsweise bei parallelen Scanfächern $8_k$ projiziert auf eine gemeinsame Scanfächer-Ebene, wie in Fig. 11 gezeigt.

Selbstverständlich können auch noch weitere, der Ablenkeinrichtung 14 vor- oder nachgeschaltete optische Elemente im Strahlengang der Laserimpulse $5_{k,n}$ vorliegen, welche zur Verschwenkung der Scanfächer $8_k$ um und/oder entlang der Scanachsen $7_k$ vom Versatz-Rechner 27 gesteuert werden können.

**Patentansprüche**

1. Vorrichtung zur Vermessung einer dazu relativbewegten Umgebung (2) durch Laufzeitmessung von daran reflektierten Laserimpulsen ($5_{k,n}$) in einem Koordinatensystem (11), umfassend

   eine erste Scaneinheit ($6_1$) zum Aussenden eines ersten Impulszuges ($4_1$) von Laserimpulsen ($5_{1,2}$) mittels eines ersten Lasersenders ($12_1$) in einer ersten Senderichtung ($\vartheta_1$) auf eine erste Ablenkeinrichtung (14) über aufeinanderfolgende Ablenkperioden ($AP_{1,p}$) mit einer Impulswiederholrate (PRR), wobei die jeweils in eine Ablenkperiode ($AP_{1,p}$) fallenden Laserimpulse ($5_{1,2}$) in um eine erste Scanachse ($7_1$) aufgefächerte erste Scanrichtungen ($R_{1,n}$) ausgesandt werden und so pro Ablenkperiode ($AP_{1,p}$) jeweils einen ersten Scanfächer ($8_1$) bilden, den sie mit einem vorgebbaren Winkelgeschwindigkeitsprofil ($\omega$) abschreiten, und zum Empfangen der zugehörigen, von ersten Abtastpunkten ($P_{1,n}$) der Umgebung (2) reflektierten Laserimpulse ($5_{1,n}$),
   zumindest eine weitere Scaneinheit ($6_k$) zum Aussenden eines weiteren Impulszuges ($4_k$) von Laserimpulsen ($5_{k,n}$) mittels eines weiteren Lasersenders ($12_k$) in einer weiteren Senderichtung ($\vartheta_k$) auf eine weitere Ablenkeinrichtung (14) über aufeinanderfolgende Ablenkperioden ($AP_{k,p}$) mit derselben Impulswiederholrate (PRR), wobei die jeweils in eine Ablenkperiode ($AP_{k,p}$) fallenden Laserimpulse ($5_{k,n}$) in um eine weitere Scanachse ($7_k$) aufgefächerte weitere Scanrichtungen ($R_{k,n}$) ausgesandt werden und so pro Ablenkperiode ($AP_{k,p}$) jeweils einen weiteren Scanfächer ($8_k$) bilden, den sie mit demselben vorgebbaren Winkelgeschwindigkeitsprofil ($\omega$) abschreiten, und zum Empfangen der zugehörigen, von weiteren Abtastpunkten ($P_{k,n}$) der Umgebung (2) reflektierten Laserimpulse ($5_{k,n}$),
   wobei sich alle Scanfächer ($8_k$) in Richtung einer der Scanachsen ($7_k$) gesehen im Wesentlichen überlappen,
   **gekennzeichnet durch** eine an die zumindest eine weitere Scaneinheit ($6_k$) angeschlossene Steuereinrichtung (29), welche dazu ausgebildet ist, die Scanfächer ($8_k$) jeder weiteren Scaneinheit ($6_k$) gegenüber den Scanfächern ($8_{k-1}$) einer in einer vorgegebenen Reihung der Scaneinheiten ($6_k$) jeweils benachbarten Scaneinheit ($6_{k-1}$) um einen von der Impulswiederholrate (PRR) und dem Winkelgeschwindigkeitsprofil ($\omega$) abhängigen Schwenk-

winkel ($\lambda_{k,k-1}$) so zu verschwenken, dass die weiteren Abtastpunkte ($P_{k,n}$) nicht mit den ersten Abtastpunkten ($P_{1,n}$) zusammenfallen.

2. Vorrichtung nach Anspruch 1, **dadurch gekennzeichnet, dass** sie auf einem Fahrzeug (3), das für eine Hauptbewegungsrichtung (F) ausgebildet ist, bevorzugt auf einem Luftfahrzeug, mit ihren Scanachsen ($7_k$) jeweils nicht-normal zur Hauptbewegungsrichtung (F) montiert ist.

3. Vorrichtung nach einem der Ansprüche 1 oder 2, **dadurch gekennzeichnet, dass** die Steuereinrichtung (29) dazu ausgebildet ist, das Winkelgeschwindigkeitsprofil ($\omega$) abhängig von zumindest einem vergangenen Entfernungsmesswert ($d_{k,n}$) der Umgebung (2) vorzugeben.

4. Vorrichtung nach einem der Ansprüche 1 bis 3, **dadurch gekennzeichnet, dass** alle Scanachsen ($7_k$) zusammenfallen.

5. Vorrichtung nach Anspruch 4, **dadurch gekennzeichnet, dass** die Steuereinrichtung (29) dazu ausgebildet ist, die Scanfächer ($8_k$) jeder weiteren Scaneinheit ($6_k$) gegenüber den Scanfächern ($8_{k-1}$) einer in einer vorgegebenen Reihung der Scaneinheiten ($6_k$) jeweils benachbarten Scaneinheit ($6_{k-1}$) so zu verschwenken, dass die Scanrichtungen ($R_{k,n}$) der Scanfächer ($8_k$), wenn diese im Wesentlichen dieselbe Ebene (23) im Koordinatensystem (11) einnehmen, um die Scanachsen ($7_k$) in regelmäßigen Winkelabständen ($\Delta\varphi_r$) angeordnet sind.

6. Vorrichtung nach Anspruch 4 oder 5, **dadurch gekennzeichnet, dass** der Schwenkwinkel ($\lambda_{k,k-1}$) zwischen den Scanfächern ($8_k$, $8_{k-1}$) je zweier in der Reihung einander benachbarter Scaneinheiten ($6_k$, $6_{k-1}$), wenn die Scanfächer ($8_k$, $8_{k-1}$) im Wesentlichen dieselbe Ebene (23) im Koordinatensystem (11) einnehmen, vermehrt um die Winkeldifferenz ($\Delta\varphi_{21}$, $\Delta\varphi_{32}$) zwischen den in diesen zwei Scanfächern ($8_k$, $8_{k-1}$) jeweils erstabgeschrittenen Scanrichtungen ($R_{k,1}$, $R_{k-1,1}$), dem Winkel ($\Delta\varphi$) zwischen zwei in einem Scanfächer ($8_k$) aufeinanderfolgend abgeschrittenen Scanrichtungen ($R_{k,n}$, $R_{k,n+1}$), dividiert durch die Anzahl (K) aller Scaneinheiten ($6_k$), entspricht, optional vermehrt um ein Vielfaches dieses Winkels ($\Delta\varphi$).

7. Vorrichtung nach einem der Ansprüche 1 bis 6, **dadurch gekennzeichnet, dass** die Steuereinrichtung (29) dazu ausgebildet ist, die Scanfächer ($8_k$) der genannten zumindest einen weiteren Scaneinheit ($6_k$) durch Steuern eines zeitlichen Versatzes ($V_{21}$, $V_{32}$) beim Aussenden ihres Impulszuges ($4_k$) von Laserimpulsen ($5_{k,n}$) zu verschwenken.

8. Vorrichtung nach einem der Ansprüche 1 bis 7, **dadurch gekennzeichnet, dass** die Steuereinrichtung (29) dazu ausgebildet ist, die Scanfächer ($8_k$) der genannten zumindest einen weiteren Scaneinheit ($6_k$) durch Steuern optischer Elemente im Strahlengang ihrer Laserimpulse ($5_{k,n}$) zu verschwenken.

9. Vorrichtung nach einem der Ansprüche 1 bis 8, **dadurch gekennzeichnet, dass** die Ablenkeinrichtung (14) jeder Scaneinheit ($6_k$) ein um seine Prismenachse ($15_k$) drehbares Spiegelprisma ($16_k$) umfasst, dessen Mantelseiten jeweils eine Spiegelfläche ($17_j$) bilden und dessen Prismenachse ($15_k$) die Scanachse ($7_k$) ist.

10. Vorrichtung nach Anspruch 9, **dadurch gekennzeichnet, dass** die Ablenkeinrichtungen (14) aller Scaneinheiten ($6_k$) durch ein und dieselbe Ablenkeinrichtung (14) gebildet sind.

11. Vorrichtung nach Anspruch 9 oder 10 jeweils in Verbindung mit Anspruch 4, **dadurch gekennzeichnet, dass** der Schwenkwinkel ($\lambda_{k,k-1}$) zwischen den Scanfächern ($8_k$, $8_{k-1}$) je zweier in der Reihung einander benachbarter Scaneinheiten ($6_k$, $6_{k-1}$) gewählt ist als

$$\lambda_{k,k-1} = \frac{\omega}{K \cdot PRR} + i \cdot \frac{\omega}{PRR} - \left(2 \cdot (\vartheta_k - \vartheta_{k-1}) + \left[\omega \cdot \frac{D_{k,k-1}}{v} \bmod \frac{360° \cdot 2}{J}\right]\right) \bmod \frac{\omega}{PRR}$$

mit

K Anzahl der Scanfächer $8_k$,
$\lambda_{k,k-1}$ Schwenkwinkel des k-ten Scanfächers $8_k$ gegenüber dem k-1-ten Scanfächer $8_{k-1}$ (k = 1 ... K),
$\omega$ durchschnittliche Winkelgeschwindigkeit des Winkel geschwindigkeitsprofils,
PRR Impulswiederholrate,

i eine ganze Zahl,

$\vartheta_k$ Senderichtung des k-ten Lasersenders $12_k$,

$D_{k,k-1}$ Distanz zwischen dem k-ten und k-1-ten Scanfächer ($8_k$) entlang der Prismenachse ($15_k$),

v Relativgeschwindigkeit zwischen Vorrichtung (1) und Umgebung (2),

J Anzahl der Spiegelflächen und

mod Modulo-Operator.

**12.** Vorrichtung nach einem der Ansprüche 9 bis 11, **dadurch gekennzeichnet, dass** der Lasersender ($12_k$) ferner einen im Strahlengang der Laserimpulse ($5_{k,n}$) liegenden verstellbaren Umlenkspiegel ($13_k$) aufweist und die Steuereinrichtung (29) dazu ausgebildet ist, die Scanfächer ($8_k$) der genannten zumindest einen weiteren Scaneinheit ($6_k$) durch Verstellen des Umlenkspiegels ($13_k$) zu verschwenken.

**13.** Vorrichtung nach einem der Ansprüche 9 bis 12, **dadurch gekennzeichnet, dass** der Lasersender ($12_k$) gegenüber der Ablenkeinrichtung (14) verstellbar gelagert und die Steuereinrichtung (29) dazu ausgebildet ist, die Scanfächer ($8_k$) der genannten zumindest einen weiteren Scaneinheit ($6_k$) durch Steuern der Lage des zugehörigen Lasersenders ($12_k$) zu verschwenken.

**14.** Vorrichtung nach einem der Ansprüche 9 bis 13, **dadurch gekennzeichnet, dass** die Steuereinrichtung (29) dazu ausgebildet ist, die Scanfächer ($8_k$) der genannten zumindest einen weiteren Scaneinheit ($6_k$) durch Steuern der Phasenlage ($\varphi_k$) der Drehbewegung des Spiegelprismas ($16_k$) zu verschwenken.

**15.** Vorrichtung nach einem der Ansprüche 1 bis 14, **dadurch gekennzeichnet, dass** alle Scanfächer ($8_k$) vom selben Punkt ($22_{1,2,3}$) ausgehen.

**16.** Vorrichtung nach einem der Ansprüche 1 bis 15 jeweils in Verbindung mit Anspruch 4, **dadurch gekennzeichnet, dass** der Schwenkwinkel ($\lambda_{k,k-1}$) zwischen den Scanfächern ($8_k$, $8_{k-1}$) je zweier in der Reihung einander benachbarten Scaneinheiten ($6_k$, $6_{k-1}$) gewählt ist als

$$\lambda_{k,k-1} = \frac{\omega}{K \cdot PRR} + i \cdot \frac{\omega}{PRR} - \left[ (R_{k,1,p} - R_{k-1,1,p'}) \bmod \frac{\omega}{PRR} \right]$$

mit

K Anzahl der Scanfächer ($8_k$),

$\lambda_{k,k-1}$ Schwenkwinkel des k-ten Scanfächers ($8_k$) gegenüber dem k-1-ten Scanfächer ($8_{k-1}$) (k = 1 ... K),

$\omega$ durchschnittliche Winkelgeschwindigkeit des Winkelgeschwindigkeitsprofils,

PRR Impulswiederholrate,

i eine ganze Zahl,

$R_{k,1,p}$ erstabgeschrittene Scanrichtung der k-ten Scaneinheit ($6_k$) in einer Referenz-Ablenkperiode ($AP_{k,p}$),

$R_{k-1,1,p'}$ erstabgeschrittene Scanrichtung der (k-1)-ten Scaneinheit ($6_{k-1}$) in jener Ablenkperiode ($AP_{k-1,p'}$), in welcher ihr Scanfächer ($8_{k-1}$) im Wesentlichen dieselbe Ebene (23) im Koordinatensystem (11) einnimmt wie der Scanfächer ($8_k$) der k-ten Scaneinheit ($6_k$) in der Referenz-Ablenkperiode ($AP_{k,p}$), und

mod Modulo-Operator.

## Claims

**1.** An apparatus for surveying an environment (2) moving relative thereto by time-of-flight measurement of laser pulses ($5_{k,n}$) reflected from the environment in a coordinate system (11), comprising

a first scanning unit ($6_1$) for transmitting a first pulse train ($4_1$) of laser pulses ($5_{1,n}$) by means of a first laser transmitter ($12_1$) in a first transmission direction ($\vartheta_1$) to a first deflection device (14) over successive deflection periods ($AP_{1,p}$) at a pulse repetition rate (PRR), wherein the laser pulses ($5_{1,n}$) which respectively fall within one deflection period ($AP_{1,p}$) are transmitted in first scanning directions ($R_{1,n}$) fanned out about a first scanning axis ($7_1$) and thus respectively form, for each deflection period ($AP_{1,p}$), a first scanning fan ($8_1$), which they pass through with a predeterminable angular velocity profile ($\omega$), and for receiving the corresponding laser pulses ($5_{1,n}$) reflected from first scan points ($P_{1,n}$) of the environment (2),

at least one further scanning unit ($6_k$) for transmitting a further pulse train ($4_k$) of laser pulses ($5_{k,n}$) by means of a further laser transmitter ($12_k$) in a further transmission direction ($\vartheta_k$) to a further deflection device (14) over successive deflection periods ($AP_{k,p}$) at the same pulse repetition rate (PRR), wherein the laser pulses ($5_{k,n}$) which respectively fall within one deflection period ($AP_{k,p}$) are transmitted in further scanning directions ($R_{k,n}$) fanned out about a further scanning axis ($7_k$) and thus respectively form, for each deflection period ($AP_{k,p}$), a further scanning fan ($8_k$), which they pass through with the same predeterminable angular velocity profile ($\omega$), and for receiving the corresponding laser pulses ($5_{k,n}$) reflected from further scan points ($P_{k,n}$) of the environment (2), wherein all scanning fans ($8_k$), seen in the direction of one of the scanning axes ($7_k$), substantially overlap, **characterised by** a control device (29) connected to the at least one further scanning unit ($6_k$) and configured to pivot the scanning fans ($8_k$) of each further scanning unit ($6_k$) with respect to the scanning fans ($8_{k-1}$) of a scanning unit ($6_{k-1}$) that is respectively adjacent in a predetermined sequence of the scanning units ($6_k$), by a pivot angle ($\lambda_{k,k-1}$) depending on the pulse repetition rate (PRR) and the angular velocity profile ($\omega$), in such a way that the further scan points ($P_{k,n}$) do not coincide with the first scan points ($P_{1,n}$).

2. The apparatus according to claim 1, **characterised in that** it is mounted on a vehicle (3) configured for a main direction of movement (F), preferably on an aircraft, with each of its scanning axes ($7_k$) being non-normal to the main direction of movement (F).

3. The apparatus according to any one of claims 1 or 2, **characterised in that** the control device (29) is configured to predetermine the angular velocity profile ($\omega$) depending on at least one past distance measurement value ($d_{k,n}$) of the environment (2).

4. The apparatus according to any one of claims 1 to 3, **characterised in that** all scanning axes ($7_k$) coincide.

5. The apparatus according to claim 4, **characterised in that** the control device (29) is configured to pivot the scanning fans ($8_k$) of each further scanning unit ($6_k$) with respect to the scanning fans ($8_{k-1}$) of a scanning unit ($6_{k-1}$) that is respectively adjacent in a predetermined sequence of the scanning units ($6_k$), in such a way that the scanning directions ($R_{k,n}$) of the scanning fans ($8_k$), when they occupy substantially the same plane (23) in the coordinate system (11), are arranged about the scanning axes ($7_k$) at regular angular intervals ($\Delta\varphi_r$).

6. The apparatus according to claim 4 or 5, **characterised in that** the pivot angle ($\lambda_{k,k-1}$) between the scanning fans ($8_k$, $8_{k-1}$) of each two scanning units ($6_k$, $6_{k-1}$) adjacent to one another in the sequence, when the scanning fans ($8_k$, $8_{k-1}$) occupy substantially the same plane (23) in the coordinate system (11), increased by the angular difference ($\Delta\varphi_{21}$, $\Delta\varphi_{32}$) between the scanning directions ($R_{k,1}$, $R_{k-1,1}$) first-passed through in each of these two scanning fans ($8_k$, $8_{k-1}$), corresponds to the angle ($\Delta\varphi$) between two scanning directions ($R_{k,n}$, $R_{k,n+1}$) successively passed through in a scanning fan ($8_k$), divided by the number (K) of all scanning units ($6_k$), optionally increased by a multiple of this angle ($\Delta\varphi$).

7. The apparatus according to any one of claims 1 to 6, **characterised in that** the control device (29) is configured to pivot the scanning fans ($8_k$) of said at least one further scanning unit ($6_k$) by controlling a time offset ($V_{21}$, $V_{32}$) when transmitting its pulse train ($4_k$) of laser pulses ($5_{k,n}$).

8. The apparatus according to any one of claims 1 to 7, **characterised in that** the control device (29) is configured to pivot the scanning fans ($8_k$) of said at least one further scanning unit ($6_k$) by controlling optical elements in the beam path of its laser pulses ($5_{k,n}$).

9. The apparatus according to any one of claims 1 to 8, **characterised in that** the deflection device (14) of each scanning unit ($6_k$) comprises a mirror prism ($16_k$) rotatable about its prism axis ($15_k$), the lateral sides of which mirror prism each form a mirror face ($17_j$), and the prism axis ($15_k$) of which mirror prism is the scanning axis ($7_k$).

10. The apparatus according to claim 9, **characterised in that** the deflection devices (14) of all scanning units ($6_k$) are formed by one and the same deflection device (14).

11. The apparatus according to claim 9 or 10, in each case in conjunction with claim 4, **characterised in that** the pivot angle ($\lambda_{k,k-1}$) between the scanning fans ($8_k$, $8_{k-1}$) of each two scanning units ($6_k$, $6_{k-1}$) adjacent to one another in the sequence is chosen as

$$\lambda_{k,k-1} = \frac{\omega}{K \cdot PRR} + i \cdot \frac{\omega}{PRR} - \left(2 \cdot (\vartheta_k - \vartheta_{k-1}) + \left[\omega \cdot \frac{D_{k,k-1}}{v} \mod \frac{360° \cdot 2}{J}\right]\right) \mod \frac{\omega}{PRR}$$

with

K number of scanning fans ($8_k$),
$\lambda_{k,k-1}$ pivot angle of the k-th scanning fan ($8_k$) with respect to the (k-1)-th scanning fan ($8_{k-1}$) (k = 1 ... K),
$\omega$ average angular velocity of the angular velocity profile,
PRR pulse repetition rate,
i an integer,
$\vartheta_k$ transmission direction of the k-th laser transmitter ($12_k$),
$D_{k,k-1}$ distance between the k-th and (k-1)-th scanning fans ($8_k$) along the prism axis ($15_k$),
v relative speed between apparatus (1) and environment (2),
J number of mirror faces and
mod modulo operator.

12. The apparatus according to any one of claims 9 to 11, **characterised in that** the laser transmitter ($12_k$) further comprises an adjustable deflection mirror ($13_k$) arranged in the beam path of the laser pulses ($5_{k,n}$), and the control device (29) is configured to pivot the scanning fans ($8_k$) of said at least one further scanning unit ($6_k$) by adjusting the deflection mirror ($13_k$).

13. The apparatus according to any one of claims 9 to 12, **characterised in that** the laser transmitter ($12_k$) is arranged adjustably relative to the deflection device (14), and the control device (29) is configured to pivot the scanning fans ($8_k$) of said at least one further scanning unit ($6_k$) by adjusting the arrangement of the corresponding laser transmitter ($12_k$).

14. The apparatus according to any one of claims 9 to 13, **characterised in that** the control device (29) is configured to pivot the scanning fans ($8_k$) of said at least one further scanning unit ($6_k$) by controlling the phase shift ($\varphi_k$) of the rotational movement of the mirror prism ($16_k$).

15. The apparatus according to any one of claims 1 to 14, **characterised in that** all scanning fans ($8_k$) originate from the same point ($22_{1,2,3}$).

16. The apparatus according to any one of claims 1 to 15, in each case in conjunction with claim 4, **characterised in that** the pivot angle ($\lambda_{k,k-1}$) between the scanning fans ($8_k$, $8_{k-1}$) of each two scanning units ($6_k$, $6_{k-1}$) adjacent to one another in the sequence is chosen as

$$\lambda_{k,k-1} = \frac{\omega}{K \cdot PRR} + i \cdot \frac{\omega}{PRR} - \left[(R_{k,1,p} - R_{k-1,1,p'}) \mod \frac{\omega}{PRR}\right]$$

with

K number of scanning fans ($8_k$),
$\lambda_{k,k-1}$ pivot angle of the k-th scanning fan ($8_k$) with respect to the (k-1)-th scanning fan ($8_{k-1}$) (k = 1 ... K),
$\omega$ average angular velocity of the angular velocity profile,
PRR pulse repetition rate,
i an integer,
$R_{k,1,p}$ first-passed through scanning direction of the k-th scanning unit ($6_k$) in a reference deflection period ($AP_{k,p}$),
$R_{k-1,1,p'}$ first-passed through scanning direction of the (k-1)-th scanning unit ($6_{k-1}$) **in that** deflection period ($AP_{k-1,p'}$) in which its scanning fan ($8_{k-1}$) occupies substantially the same plane (23) in the coordinate system (11) as the scanning fan ($8_k$) of the k-th scanning unit ($6_k$) in the reference deflection period ($AP_{k,p}$), and
mod modulo operator.

**Revendications**

1. Dispositif de mesure d'un environnement en mouvement relatif par rapport à celui-ci (2) par la mesure de temps de vol d'impulsions laser ($5_{k,n}$) réfléchies par l'environnement dans un système de coordonnées (11), comprenant

   une première unité de balayage ($6_1$) pour l'émission d'un premier train d'impulsions ($4_1$) d'impulsions laser ($5_{1,n}$) au moyen d'un premier émetteur laser ($12_1$) dans une première direction d'émission ($\vartheta_1$) sur un premier dispositif de déviation (14) sur des périodes de déviation ($AP_{1,p}$) successives avec un taux de répétitions d'impulsions (PRR), où les impulsions laser ($5_{1,n}$) qui tombent respectivement dans une période de déviation ($AP_{1,p}$), sont émises dans des premières directions de balayage ($R_{1,n}$) déployées autour d'un premier axe de balayage ($7_1$) et forment ainsi respectivement un premier éventail de balayage ($8_1$) par période de déviation ($AP_{1,p}$) qu'elles parcourent avec un profil de vitesse angulaire ($\omega$) prédéterminable, et pour la réception des impulsions laser ($5_{1,n}$) correspondantes, réfléchies des premiers points de balayage ($P_{1,n}$) de l'environnement (2),
   au moins une autre unité de balayage ($6_k$) pour l'émission d'un autre train d'impulsions ($4_k$) d'impulsions laser ($5_{k,n}$) au moyen d'un autre émetteur laser ($12_k$) dans une autre direction d'émission ($\vartheta_k$) sur un autre dispositif de déviation (14) sur des périodes de déviation ($AP_{k,p}$) successives avec le même taux de répétitions d'impulsions (PRR), où les impulsions laser ($5_{k,n}$) qui tombent respectivement dans une période de déviation ($AP_{k,p}$) sont émises dans d'autres directions de balayage ($R_{k,n}$) déployées en éventail autour d'un autre axe de balayage ($7_k$) et forment ainsi respectivement un autre éventail de balayage ($8_k$) par période de déviation ($AP_{k,p}$) qu'elles parcourent avec le même profil de vitesse angulaire ($\omega$) prédéterminable, et pour la réception des impulsions laser ($5_{k,n}$) correspondantes, réfléchies d'autres points de balayage ($P_{k,n}$) de l'environnement (2),
   dans lequel tous les éventails de balayage ($8_k$), vus dans la direction d'un des axes de balayage ($7_k$), se superposent essentiellement,
   **caractérisé par** un dispositif de commande (29) connecté à l'au moins une autre unité de balayage ($6_k$) et conçu pour faire pivoter les éventails de balayage ($8_k$) de chaque autre unité de balayage ($6_k$) par rapport aux éventails de balayage ($8_{k-1}$) d'une unité de balayage ($6_{k-1}$) respectivement voisine dans un ordre prédéterminé des unités de balayage ($6_k$), d'un angle de pivotement ($\lambda_{k,k-1}$) qui dépend du taux de répétitions d'impulsions (PRR) et du profil de vitesse angulaire ($\omega$), de telle sorte que les autres points de balayage ($P_{k,n}$) ne coïncident pas avec les premiers points de balayage ($P_{1,n}$).

2. Dispositif selon la revendication 1, **caractérisé en ce qu'**il est monté sur un véhicule (3), qui est conçu pour une direction de déplacement principale (F), de préférence sur un véhicule aérien, avec ses axes de balayage ($7_k$) non-normaux par rapport à la direction de déplacement principale (F).

3. Dispositif selon l'une quelconque des revendications 1 ou 2, **caractérisé en ce que** le dispositif de commande (29) est conçu pour prédéterminer le profil de vitesse angulaire ($\omega$) en fonction d'au moins une valeur de mesure d'éloignement ($d_{k,n}$) précédente de l'environnement (2).

4. Dispositif selon l'une quelconque des revendications 1 à 3, **caractérisé en ce que** tous les axes de balayage ($7_k$) coïncident.

5. Dispositif selon la revendication 4, **caractérisé en ce que** le dispositif de commande (29) est conçu pour faire pivoter les éventails de balayage ($8_k$) de chaque autre unité de balayage ($6_k$) par rapport aux éventails de balayage ($8_{k-1}$) d'une unité de balayage ($6_{k-1}$) respectivement voisine dans un ordre prédéterminé des unités de balayage ($6_k$), de telle manière que les directions de balayage ($R_{k,n}$) des éventails de balayage ($8_k$), lorsque celles-ci adoptent essentiellement le même plan (23) dans le système de coordonnées (11), sont disposées à des intervalles angulaires réguliers ($\Delta\varphi_r$) autour d'axes de balayage ($7_k$).

6. Dispositif selon la revendication 4 ou 5, **caractérisé en ce que** l'angle de pivotement ($\lambda_{k,k-1}$) entre les éventails de balayage ($8_k$, $8_{k-1}$) de chaque deux unités de balayage ($6_k$, $6_{k-1}$) voisines l'une à l'autre dans l'ordre, lorsque les éventails de balayage ($8_k$, $8_{k-1}$) adoptent essentiellement le même plan (23) dans le système de coordonnées (11), augmenté par la différence angulaire ($\Delta\varphi_{21}$, $\Delta\varphi_{32}$) entre les directions de balayage ($R_{k,1}$, $R_{k-1,1}$) respectivement parcourus en premier dans ces deux éventails de balayage ($8_k$, $8_{k-1}$), correspond à l'angle ($\Delta\varphi$) entre deux directions de balayage ($R_{k,n}$, $R_{k,n+1}$) parcourues successivement dans un éventail de balayage ($8_k$) divisé par le nombre (K) total des unités de balayage ($6_k$), éventuellement augmenté par un multiple de cet angle ($\Delta\varphi$).

7. Dispositif selon l'une quelconque des revendications 1 à 6, **caractérisé en ce que** le dispositif de commande (29) est conçu pour faire pivoter les éventails de balayage ($8_k$) de ladite au moins une autre unité de balayage ($6_k$) par la

commande d'un décalage temporel ($V_{21}$, $V_{32}$) lors de l'émission de son train d'impulsions ($4_k$) d'impulsions laser ($5_{k,n}$).

8. Dispositif selon l'une quelconque des revendications 1 à 7, **caractérisé en ce que** le dispositif de commande (29) est conçu pour faire pivoter les éventails de balayage ($8_k$) de ladite au moins une autre unité de balayage ($6_k$) par la commande d'éléments optiques dans le trajet de faisceau de ses impulsions laser ($5_{k,n}$).

9. Dispositif selon l'une quelconque des revendications 1 à 8 **caractérisé en ce que** le dispositif de déviation (14) de chaque unité de balayage ($6_k$) comprend un prisme miroir ($16_k$) rotatif autour de son axe de prisme ($15_k$), dont les faces d'enveloppe forment respectivement une surface de miroir ($17_j$) et dont l'axe de prisme ($15_k$) est l'axe de balayage ($7_k$).

10. Dispositif selon la revendication 9, **caractérisé en ce que** les dispositifs de déviation (14) de toutes les unités de balayage ($6_k$) sont formés par un et même dispositif de déviation (14).

11. Dispositif selon la revendication 9 ou 10 respectivement en combinaison avec la revendication 4, **caractérisé en ce que** l'angle de pivotement ($\lambda_{k,k-1}$) entre les éventails de balayage ($8_k$, $8_{k-1}$) de chaque deux d'unités de balayage ($6_k$, $6_{k-1}$) voisines l'une à l'autre dans l'ordre est choisi en tant que

$$\lambda_{k,k-1} = \frac{\omega}{K \cdot PRR} + i \cdot \frac{\omega}{PRR} - \left( 2 \cdot (\vartheta_k - \vartheta_{k-1}) + \left[ \omega \cdot \frac{D_{k,k-1}}{v} \mod \frac{360° \cdot 2}{J} \right] \right) \mod \frac{\omega}{PRR}$$

avec

K nombre d'éventails de balayage $8_k$,
$\lambda_{k,k-1}$ angle de pivotement du k-ième éventail de balayage $8_k$ par rapport au k-1-ième éventail de balayage $8_{k-1}$ (k = 1 ... K),
$\omega$ vitesse angulaire moyenne du profil de vitesse angulaire,
PRR taux de répétitions d'impulsions,
i nombre entier,
$\vartheta_k$ direction d'émission du k-ième émetteur laser $12_k$,
$D_{k,k-1}$ distance entre le k-ième et le (k-1)-ième éventail de balayage ($8_k$) le long de l'axe de prisme ($15_k$),
v vitesse relative entre le dispositif (1) et l'environnement (2),
J nombre de surfaces de miroir et
mod opérateur modulo.

12. Dispositif selon l'une quelconque des revendications 9 à 11, **caractérisé en ce que** l'émetteur laser ($12_k$) présente en outre un miroir de déviation ($13_k$) réglable se situant dans le trajet de faisceau des impulsions laser ($5_{k,n}$) et le dispositif de commande (29) est conçu pour faire pivoter les éventails de balayage ($8_k$) de ladite au moins une autre unité de balayage ($6_k$) par le réglage du miroir de déviation ($13_k$).

13. Dispositif selon l'une quelconque des revendications 9 à 12, **caractérisé en ce que** l'émetteur laser ($12_k$) est logé de manière réglable par rapport au dispositif de déviation (14) et le dispositif de commande (29) est conçu pour faire pivoter les éventails de balayage ($8_k$) de ladite au moins une autre unité de balayage ($6_k$) par la commande de la position de l'émetteur laser ($12_k$) correspondant.

14. Dispositif selon l'une quelconque des revendications 9 à 13, **caractérisé en ce que** le dispositif de commande (29) est conçu pour faire pivoter les éventails de balayage ($8_k$) de ladite au moins une autre unité de balayage ($6_k$) par la commande de la position de phase ($\varphi_k$) du mouvement de rotation du prisme miroir ($16_k$).

15. Dispositif selon l'une quelconque des revendications 1 à 14, **caractérisé en ce que** tous les éventails de balayage ($8_k$) sont issus du même point ($22_{1,2,3}$).

16. Dispositif selon l'une quelconque des revendications 1 à 15 respectivement en combinaison avec la revendication 4, **caractérisé en ce que** l'angle de pivotement ($\lambda_{k,k-1}$) entre les éventails de balayage ($8_k$, $8_{k-1}$) de chaque deux unités de balayage ($6_k$, $6_{k-1}$) voisines l'une à l'autre dans l'ordre est choisi en tant que

$$\lambda_{k,k-1} = \frac{\omega}{K \cdot PRR} + i \cdot \frac{\omega}{PRR} - \left[ (R_{k,1,p} - R_{k-1,1,p'}) \bmod \frac{\omega}{PRR} \right]$$

avec

K nombre d'éventails de balayage (8$_k$),

$\lambda_{k,k-1}$ angle de pivotement du k-ième éventail de balayage (8$_k$) par rapport au (k-1)-ième éventail de balayage (8$_{k-1}$) (k = 1 ... K),

$\omega$ vitesse angulaire moyenne du profil de vitesse angulaire,

PRR taux de répétitions d'impulsions,

i nombre entier,

$R_{k,1,p}$ direction de balayage parcourue en premier de la k-ième unité de balayage (6$_k$) au cours d'une période de déviation (AP$_{k,p}$) de référence,

$R_{k-1,1,p'}$ direction de balayage parcourue en premier de la (k-1)-ième unité de balayage (6$_{k-1}$) dans la période de déviation (AP$_{k-1,p'}$) dans laquelle son éventail de balayage (8$_{k-1}$) adopte essentiellement le même plan (23) dans le système de coordonnées (11) que celui l'éventail de balayage (8$_k$) de la k-ième unité de balayage (6$_k$) dans la période de déviation (AP$_{k,p}$) de référence, et

mod opérateur modulo.

*Fig. 1*

*Fig. 2*

**Fig. 3a**

**Fig. 3b**

**Fig. 3c**

**Fig. 3d**

**Fig. 4**

**Fig. 5**

**Fig. 6**

**Fig. 7**

*Fig. 8*

*Fig. 9*

*Fig. 10*

*Fig. 11*

**IN DER BESCHREIBUNG AUFGEFÜHRTE DOKUMENTE**

**In der Beschreibung aufgeführte Patentdokumente**

- EP 3182159 B1
- DE 102004050682 A1